(19) **Europäisches Patentamt**
**European Patent Office**
**Office européen des brevets**

(11) **EP 4 502 878 A1**

(12) **EUROPEAN PATENT APPLICATION**
published in accordance with Art. 153(4) EPC

(43) Date of publication:
**05.02.2025 Bulletin 2025/06**

(21) Application number: **23778826.0**

(22) Date of filing: **01.02.2023**

(51) International Patent Classification (IPC):
***G06N 20/00*** (2019.01)

(52) Cooperative Patent Classification (CPC):
**G06N 20/00**

(86) International application number:
**PCT/JP2023/003208**

(87) International publication number:
**WO 2023/188790 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.03.2022 JP 2022052909**

(71) Applicant: **Sony Group Corporation
Tokyo 108-0075 (JP)**

(72) Inventor: **SUZUKI, Kenji
Tokyo 108-0075 (JP)**

(74) Representative: **2SPL Patentanwälte PartG mbB
Landaubogen 3
81373 München (DE)**

(54) **INFORMATION PROCESSING DEVICE, INFORMATION PROCESSING METHOD, AND COMPUTER PROGRAM**

(57) Provided is an information processing device that performs processing for training a model in which bias is mitigated.

The information processing device includes: a determination unit which classifies training data for model training for each attribute and determines presence or absence of bias of the training data due to a difference in attributes; and a generation unit which automatically generates training data of a minor attribute by using a GAN and mitigates the bias when the determination unit determines that there is the bias. The information processing device further includes a model bias determination unit which determines presence or absence of bias of the model that has been trained due to a difference in attributes of input data.

*FIG. 1*

**Description**

TECHNICAL FIELD

The technology disclosed in the present specification (hereinafter, "the present disclosure") relates to an information processing device, an information processing method, and a computer program that perform processing related to training.

BACKGROUND ART

With the evolution of machine learning, recognition, identification, prediction, and the like beyond humans have been realized, and utilization in each field has progressed. On the other hand, fairness in machine learning, that is, unfair determination made by machine learning depending on race, gender, and the like has been a social issue. Causes of such unfairness in machine learning include bias caused by data used for training and bias in training. Therefore, the challenge lies in how to mitigate the bias in data collection and how to learn collected data so as to enable fair determination. However, it is practically difficult to collect complete data ensuring fairness with respect to race and gender. This is because random collection of data causes some biased data distribution, which affects machine learning as data bias.

For example, there has been proposed a system that manages a machine learning model, the system including: a replacement means that performs replacement of a first input value included in an input with a second input value in a case where a first prediction result, which is a result of prediction by a first model using the input including the first input value satisfies a predetermined condition; a storage means that stores a second prediction result, which is a result of prediction by the first model using an input after the replacement has been performed; a reception means that receives feedback for the second prediction result; and a creation means that creates a second model by performing machine learning using training data including the input including the first input value and the second prediction result on the basis of the feedback that has been received (see Patent Document 1). The system is configured to determine whether or not a result of prediction using an input for verification by the second model satisfies the predetermined condition, and replace the first model with the second model in a case where it is determined that the predetermined condition is not satisfied.

CITATION LIST

PATENT DOCUMENT

Patent Document 1: Japanese Patent Application Laid-Open No. 2021-12593

NON-PATENT DOCUMENT

Non-Patent Document 1: Y. Viazovetskyi, V. Ivashkin, and E. Kashin, "StyleGAN2 Distillation for Feed-forward Image Manipulation" <URL: https://arxiv.org/abs/2003.03581>
Non-Patent Document 2: IBM AI Fairness 360:arXiv:1810.01943v1

SUMMARY OF THE INVENTION

PROBLEMS TO BE SOLVED BY THE INVENTION

An object of the present disclosure is to provide an information processing device, an information processing method, and a computer program that perform processing for training a model in which bias is mitigated.

SOLUTIONS TO PROBLEMS

The present disclosure has been made in view of the above problem, and a first aspect thereof is an information processing device including:

a determination unit which classifies training data for training a model for each attribute and determines presence or absence of bias of the training data due to a difference in attributes; and
a generation unit which automatically generates training data of a minor attribute and mitigates the bias when the determination unit determines that there is the bias,

the generation unit automatically generating training data of a minor attribute by using a GAN.

The information processing device according to the first aspect further includes: a training unit which trains the model by using training data to which training data of a minor attribute automatically generated by the generation unit is added; and a model bias determination unit which determines presence or absence of bias of the model that has been trained due to a difference in attributes of input data. Therefore, the information processing device according to the first aspect mitigates bias of training data at the time of training and mitigates the bias of trained model at the time of operating the trained model, thereby securing the fairness of the model.

Furthermore, a second aspect of the present disclosure is an information processing method including:

a determination step of classifying training data for training a model for each attribute and determining presence or absence of bias of the training data due to a difference in attributes; and
a generation step of automatically generating training data of a minor attribute and mitigating the bias when it is determined in the determination step that there is the bias.

Furthermore, a third aspect of the present disclosure is a computer program described in a computer-readable format so as to cause a computer to function as:

a determination unit which classifies training data for training a model for each attribute and determines presence or absence of bias of the training data due to a difference in attributes; and
a generation unit which automatically generates training data of a minor attribute and mitigating the bias when the determination unit determines that there is the bias.

The computer program according to the third aspect of the present disclosure defines a computer program described in a computer-readable format so as to implement predetermined processing on a computer. In other words, by installing the computer program according to the third aspect of the present disclosure in a computer, the computer can perform a cooperative operation and produce effects similar to those produced by the information processing device according to the first aspect of the present disclosure.

Furthermore, a fourth aspect of the present disclosure is an information processing device including:

a prediction unit which makes prediction about input data by using a trained model; and
a determination unit which determines presence or absence of bias of a prediction result due to a difference in attributes of input data.

The information processing device according to the fourth aspect further includes a notification unit that gives notification of a determination result obtained by the determination unit to an external device, in which a model parameter in which bias is mitigated according to the notification is received and set for the trained model.

Furthermore, a fifth aspect of the present disclosure is an information processing method including:

a prediction step of making a prediction about input data by using a trained model; and
a determination step of determining presence or absence of bias of a prediction result due to a difference in attributes of input data.

Furthermore, a sixth aspect of the present disclosure is a computer program described in a computer-readable format so as to cause a computer to function as:

a prediction unit which makes a prediction about input data by using a trained model; and
a determination unit which determines presence or absence of bias of a prediction result due to a difference in attributes of input data.

The computer program according to the sixth aspect of the present disclosure defines a computer program described in a computer-readable format so as to implement predetermined processing on a computer, and by installing the computer program in a computer, the computer can perform a cooperative operation and produce effects similar to those produced by the information processing device according to the fourth aspect of the present disclosure

EFFECTS OF THE INVENTION

According to the present disclosure, it is possible to provide an information processing device, an information

EP 4 502 878 A1

processing method, and a computer program that perform processing for mitigating bias of training data and mitigating bias of a machine learning model.

Note that the effects described in the present specification are merely examples, and the effects to be brought by the present disclosure are not limited thereto. Furthermore, in addition to the effects described above, the present disclosure might further exhibit additional effects in some cases.

Still another object, feature, and advantage of the present disclosure will become clear by further detailed description with reference to an embodiment as described later and the attached drawings.

BRIEF DESCRIPTION OF DRAWINGS

Fig. 1 is a diagram illustrating a functional configuration example of a training system 100.
Fig. 2 is a flowchart illustrating a processing procedure executed in the training system 100.
Fig. 3 is a diagram illustrating a structure of a convolutional neural network 300.
Fig. 4 is a diagram illustrating a fully connected layer in a simplified manner.
Fig. 5 is a diagram illustrating a configuration example of a GAN.
Fig. 6 is a diagram illustrating a mechanism of a machine learning model.
Fig. 7 is a diagram illustrating inter-group fairness of the machine learning model.
Fig. 8 is a diagram illustrating inter-individual fairness of the machine learning model.
Fig. 9 is a diagram illustrating an example of demographic parity.
Fig. 10 is a diagram illustrating an example of equalized odds.
Fig. 11 is a diagram illustrating an example of equal opportunity.
Fig. 12 is a diagram illustrating bias mitigation processing performed in each stage of preprocessing, training processing, and after training.
Fig. 13 is a diagram illustrating an operation example of the training system 100.
Fig. 14 is a diagram illustrating a transaction performed between servers of edge devices.
Fig. 15 is a diagram illustrating a functional configuration of an imaging device 1500.
Fig. 16 is a diagram illustrating a hardware implementation example of the imaging device 1500.
Fig. 17 is a diagram illustrating another hardware implementation example of the imaging device 1500.
Fig. 18 is a diagram illustrating a stacked image sensor 11500 having a two-layer structure.
Fig. 19 is a diagram illustrating a stacked image sensor 1900 having a three-layer structure.
Fig. 20 is a diagram illustrating a functional configuration example of an in-vehicle camera 2000.
Fig. 21 is a view illustrating an output example of a name display system.
Fig. 22 is a flowchart illustrating a processing procedure for performing name learning by a model.
Fig. 23 is a diagram illustrating a transaction performed between an edge device and a server for correcting a model bias in an actual operation stage.
Fig. 24 is a flowchart illustrating a processing procedure executed at the time of actual operation by the edge device on which the trained model is mounted.

MODE FOR CARRYING OUT THE INVENTION

In the description below, the present disclosure will be explained in the following order, with reference to the drawings.

A. Outline
B. Configuration of Training System
C. Configuration of Machine Learning Model
D. Determination of Data Bias
E. Data Generation Using GAN
F. Fairness of Machine Learning Model
G. Bias Mitigation in Machine Learning Model
H. Operation Example
H-1. System Configuration and Operation
H-2. Configuration of Edge Device
I. Application Example

A. Outline

Fairness in machine learning, that is, unfair determination made by machine learning depending on race, gender, and the like has been a social issue. Causes of such unfairness in machine learning include bias caused by data used for training and bias in training. It can be easily understood that, in a case where a data set used for model training is affected by bias or a gap due to race, ethnicity, gender, or the like, a machine learning model based on the data set is also easily affected. Therefore, the challenge lies in how to mitigate the bias in data collection and how to learn collected data so as to enable fair determination.

For example, essentially, determination should be originally made without depending on a difference in sensitive attributes such as race and gender when various predictions such as personnel acceptance/rejection determination, determination of a re-offending rate, and loan screening are made by artificial intelligence. However, if determination in favor of only some people having a sensitive attribute is made, opportunities of people having other sensitive attributes are unreasonably lost, and unfairness is caused. It is necessary to train a model such that distribution of prediction scores does not change depending on sensitive attributes such as race and gender.

Therefore, in the present disclosure, in a data collection stage, fairness in machine learning is realized by classifying data for each sensitive attribute such as race and gender and supplementing insufficient data. Specifically, collected data is classified for each sensitive attribute, and insufficient data of a sensitive attribute is automatically generated using a generative adversarial network (GAN). Therefore, according to the present disclosure, in the process of data collection, by measuring fairness of collected data and compensating for insufficient data on the basis of a method without human intervention, adjustment can be automatically performed so as to eliminate data bias.

Moreover, in the present disclosure, fairness of the trained model that has been trained using data from which bias has been removed is also checked, and correction processing for mitigating the bias of the machine learning model can also be performed.

Therefore, according to the present disclosure, it is possible to ensure fairness of data by automatically generating data of a minor attribute without human intervention. According to the present disclosure, accuracy of learning does not decrease, unlike a case where data of a major attribute is reduced to remove data bias. Furthermore, according to the present disclosure, it is possible to save labor for collecting data of a minor attribute from the real world, and thus, it is possible to significantly reduce development processes of machine learning. Furthermore, according to the present disclosure, it is possible to set a threshold for bias of data collected for model training and bias determination of a trained model, and thus, it is possible to perform model training and bias determination of a trained model according to a situation.

B. Configuration of Training System

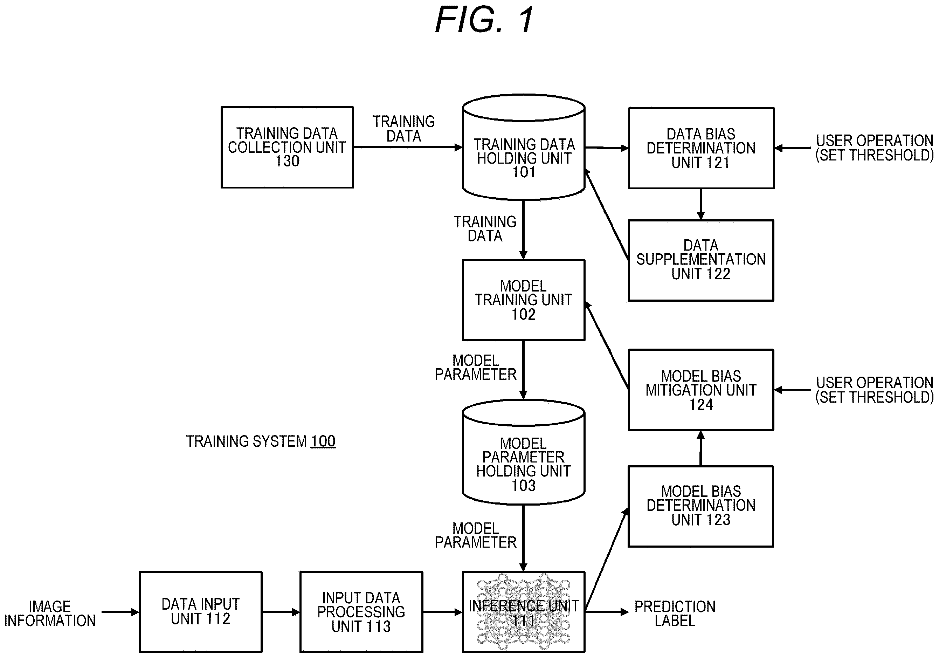

Fig. 1 illustrates a functional configuration example of a training system 100 to which the present disclosure is applied. Although the illustrated training system 100 is used by being installed on, for example, an edge device, some or all of the functions of the training system 100 may be constructed on a cloud or an arithmetic device capable of large-scale computation. Hereinafter, the training system 100 trains a machine learning model for performing image recognition such as face detection, face identification, person/object detection, or posture estimation, for example, and may also train a machine leaning model for making an inference such as acceptance/rejection of personnel, a re-offending rate, or loan judgement on the basis of an image. However, the present disclosure is not limited thereto, and the training system 100 may train machine learning models used for inference in various fields.

The illustrated training system 100 includes a training data holding unit 101, a model training unit 102, a model parameter holding unit 103, an inference unit 111, a data input unit 112, and an input data processing unit 113. Among those units, the training data holding unit 101, the model training unit 102, and the model parameter holding unit 103 operate in a training phase of a machine learning model, and the inference unit 111, the data input unit 112, and the input data processing unit 113 operate in an inference phase using the trained model. Although the training system 100 is used by being installed on, for example, an edge device, some or all of the functions of the training system 100 may be constructed on a cloud or an arithmetic device capable of large-scale computation. For example, the model training unit 102 that handles a huge amount of data and needs high calculation ability may be arranged in a server on a cloud, and the inference unit 111 that uses the trained model may be arranged in an edge device such as a digital camera, a multifunctional information terminal such as a smartphone or a tablet, or a personal computer.

Furthermore, in the present embodiment, the training system 100 further includes a training data collection unit 130 that provides training data to be used for training the machine learning model, a data bias determination unit 121 that determines bias of the training data to be used for training the machine learning model in the model training unit 102, and a data supplementation unit 122 that supplements insufficient training data on the basis of the determination result of the data bias.

Furthermore, the training system 100 may further include a model bias determination unit 123 that determines bias when the inference unit 111 makes an inference by using the trained model, and a model bias mitigation unit 124 that executes processing for mitigating bias of the machine learning model on the basis of the model bias determination result.

The training data collection unit 130 collects training data to be used by the model training unit 102 for model training. The training data basically includes a data set (x, y) obtained by combining input data x to be input to a model to be trained and a correct answer label y serving as a correct answer for the input data x. Furthermore, in the present embodiment, in order to determine the data bias for each sensitive attribute s, a data set (x, y, s) further including the sensitive attribute s of the input data x in addition to the input data x and the correct answer label thereof may be used as the training data. For example, in a case where the model training unit 102 trains a machine learning model for image classification, the training data collection unit 130 provides training data including a combination of a captured image and a correct answer label (what the subject of the captured image is) in a case of a digital camera, for example. The training data collection unit 130 collects, for example, training data including images captured by a large number of digital cameras via a wide area network such as the Internet, and accumulates the training data in the training data holding unit 101.

The training data holding unit 101 accumulates training data to be used by the model training unit 102 for model training. Each piece of training data includes a data set obtained by combining input data y input to a model to be trained with a correct answer label y of the correct answer to be inferred by the model, but in the present embodiment, a data set (x, y, s) to which the sensitive attribute s of the input data x is further added may be used as the training data (described above). The training data holding unit 101 accumulates data sets provided from the training data collection unit 130, but may accumulate data sets obtained from another source. In the present embodiment, training data supplied from the data supplementation unit 122 (described later) is also accumulated in the training data holding unit 101. In a case where the data model training unit 102 carries out deep learning, a huge amount of data sets is accumulated in the training data holding unit 101.

The model training unit 102 sequentially reads the training data from the training data holding unit 101, trains the machine learning model to be trained, and updates the machine learning model. The machine learning model includes, for example, a neural network, but may be a model using a type such as support vector regression or Gaussian process regression. The machine learning model including the neural network has a multilayer structure including an input layer that receives data (explanatory variable) such as an image, an output layer that outputs a label (objective variable) serving as an inference result for the input data, and one or a plurality of intermediate layers (or hidden layers) between the input layer and the output layer. Each of the layers includes a plurality of nodes corresponding to neurons. Coupling between the nodes across the layers has a weight, and a value of the data input to the input layer is transformed as the data passes from layer to layer. For example, the model training unit 102 calculates a loss function defined on the basis of an error between a label output from the machine learning model for the input data and a known correct answer label corresponding to the input data, and trains the machine learning model while updating the model parameter (weight coefficient between nodes, or the like) by backpropagation in such a manner that the loss function is minimized. Note that, since the training processing of the machine learning model is enormous in calculation amount, distributed learning using a plurality of graphics processing units (GPUs) or a plurality of calculation nodes may be carried out.

Then, the model training unit 102 stores the model parameter obtained as a training result, in the model parameter holding unit 103. The model parameter is a variable element that defines the model, and is, for example, a coupling weight coefficient or the like to be given between nodes of a neural network model.

The inference unit 111, the data input unit 112, and the input data processing unit 113 implement the inference phase by using the trained model. The data input unit 112 inputs sensor information obtained by a sensor included in the edge device. The input data processing unit 113 performs data processing on data input from the data input unit 112 such that the data has a data format that can be input to the model (for example, a neural network model), and inputs the data to the inference unit 111. The inference unit 111 outputs a label inferred from the input data by using the model in which the model parameter read from the model parameter holding unit 103 is set, that is, the trained model.

The data bias determination unit 121 analyzes the training data for training the machine learning model accumulated in the training data holding unit 101 to determine the bias. Specifically, the data bias determination unit 121 classifies the training data into each sensitive attribute and determines the presence or absence of bias. For data bias determination, the training data may be a data set (x, y, s) further including the sensitive attribute s of the input data in addition to the input data x and the correct answer label y. Furthermore, the sensitive attribute may not be included in the training data, and the sensitive attribute of each training data may be determined in the data bias determination unit 121 or another functional module.

The sensitive attribute herein is, for example, gender, race, or the like. Specifically, gender may be defined as a first sensitive attribute $s_1$, a male may be defined as "$s_1 = 1$", a female may be defined as "$s_1 = 0$", race may be defined as a second sensitive attribute $s_2$, a white may be defined as "$s_2 = 1$", and a black may be defined as "$s_2 = 0$". However, gender and race are examples of the sensitive attribute, and what attribute is treated as the sensitive attribute is arbitrary, and the sensitive attribute may be flexibly set according to an application field of the machine learning model.

As a result of classifying the training data into each sensitive attribute, regarding a certain sensitive attribute $s_i$, in a case where the ratio of the number of pieces of training data in which $s_i = 1$ (that is, a major attribute) to the number of pieces of training data in which $s_i = 0$ (that is, a minor attribute) is equal to or greater than a predetermined threshold, the data bias determination unit 121 outputs a determination result indicating that there is data bias for the sensitive attribute $s_i$ to the data supplementation unit 122 (here, i is a serial number of the sensitive attribute).

Note that the threshold is desirably a value representing a range in which unfairness is socially acceptable. In the present embodiment, the threshold for data bias determination for each sensitive attribute can be set by a user operation via, for example, a user interface (UI). Furthermore, an attribute to be handled as sensitive in the training system 100 may also be able to be specified through a user operation.

The data supplementation unit 122 performs processing of supplementing insufficient training data on the basis of the determination result of the data bias. For example, when receiving a determination result in which regarding the sensitive attribute $s_i$, there is data bias in which the number of pieces of training data satisfying $s_i = 0$ is small (that is, the sensitive attribute $s_i = 0$ is a minor attribute) from the data bias determination unit 121, the data supplementation unit 122 supplements data of the minor attribute and accumulates the data in the training data holding unit 101. In the present embodiment, the data supplementation unit 122 artificially increases the data of the minor attribute from the training data that has already been acquired (is accumulated in the training data holding unit 101). According to the method of artificially increasing data of the minor attribute, the work is easier than in the case of manual adjustment, and the hurdle for obtaining the consent of the person himself/herself is also lowered. Specifically, the data supplementation unit 122 automatically generates data of the minor attribute by using a generative adversarial network (GAN) algorithm. Of course, the method of supplementing data may be, for example, a method of collecting data via a wide area network such as the Internet, similarly to the training data collection unit 130.

The model bias determination unit 123 analyzes the results of inference performed by the inference unit 111 using the trained model, and determines whether or not fairness of the trained model is ensured, that is, model bias. For example, the model bias determination unit 123 determines whether or not inter-group fairness, that is, estimation of the machine learning model for a group belonging to a certain sensitive attribute is disadvantageous. In a case where, regarding a certain sensitive attribute $s_i$, the percentage of disadvantageous estimation results that are output is higher in the attribute of $s_i = 0$ than in the attribute of $s_i = 1$, the model bias determination unit 123 determines that there is model bias. Furthermore, the model bias determination unit 123 may also determine fairness between individuals, for example, whether or not the difference in the estimation results of the machine learning model is large for individuals having the same ability. However, in the present specification, fairness between groups will be mainly described.

Note that, in the present embodiment, the threshold for model bias determination can be set by a user operation via a UI, for example.

The model bias mitigation unit 124 executes processing for mitigating the bias of the machine learning model on the basis of the model bias determination result. The model bias mitigation unit 124 may execute a model bias mitigation algorithm such as transfer learning, fine tuning, and incremental learning, and the model training unit 102 may mitigate the model bias for the trained model.

Note that transfer learning is a learning method of applying knowledge learned in another task to learning of another region. For example, in a convolutional neural network (described later) including a feature amount extractor and a discriminator, the result of training the feature amount extractor of the preceding stage with another task is fixed, and only the image classification unit of the subsequent stage is trained with another problem. In contrast, in fine tuning, fine adjustment is also performed in the feature amount extractor. Furthermore, incremental learning is learning processing that is additionally performed at a timing different from learning in the training phase. For example, incremental learning processing is started at a timing when it is detected that there is model bias in the inference phase, but incremental learning may be periodically performed.

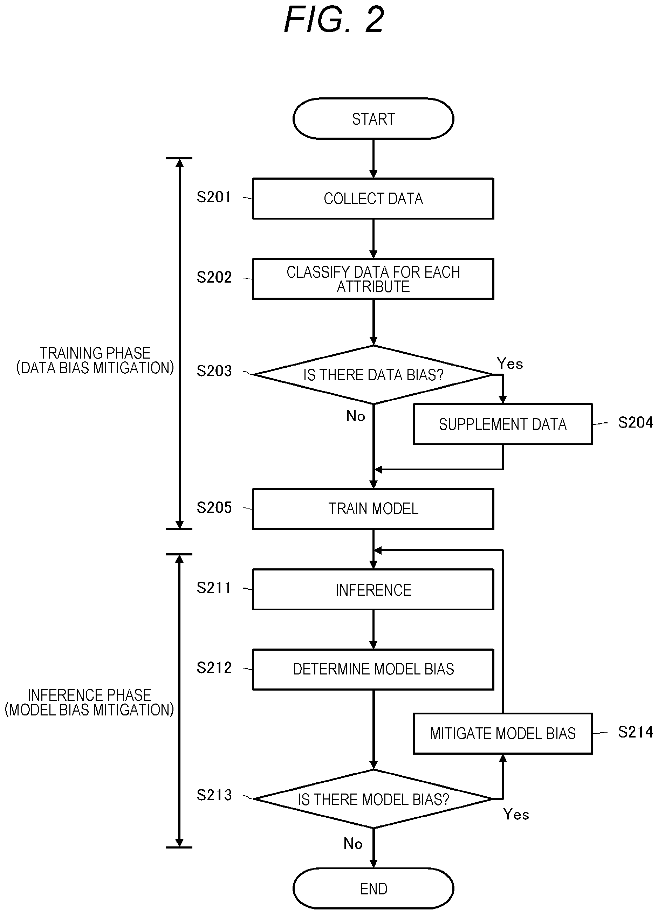

Fig. 2 illustrates a schematic processing procedure executed in the training system 100 in the form of a flowchart. The illustrated processing procedure is classified into the training phase in which the machine learning model is trained and the inference phase in which inference is performed using the trained model, and has a main characteristic in that the processing procedure includes processing of mitigating bias of training data, that is, "data bias" in the training phase and processing of mitigating bias of inference by the trained model, that is, "model bias" in the inference phase.

First, the training phase will be described. The training data collection unit 130 collects training data to be used by the model training unit 102 for model training and accumulates the training data in the training data holding unit 101 (step S201). The training data collection unit 130 collects, for example, training data including images captured by a large number of digital cameras via a wide area network such as the Internet, but the source from which the training data is collected is not particularly limited.

The training data basically includes a data set (x, y) obtained by combining input data x and a correct answer label y corresponding to the input data x. The training data collection unit 130 may simultaneously acquire the label y at the stage of acquiring the data x, or may label the acquired data x after acquiring the data x. Furthermore, in the latter case, the labeling method is not particularly limited.

Furthermore, in the present embodiment, in order to determine whether there is bias in data x collected for the sensitive attribute in the subsequent data bias determination processing, the training data collection unit 130 may simultaneously acquire the sensitive attribute of each data x at the stage of acquiring the data x. Of course, the sensitive attribute of the acquired data x may be determined after the data x is acquired. For example, the training data collection unit 130 or a functional module, not illustrated, may determine the sensitive attribute of the acquired data x by using artificial intelligence (AI), or may determine the sensitive attribute by using any other algorithm.

Next, the data bias determination unit 121 classifies the training data accumulated in the training data holding unit 101 (alternatively, only data used for training among the data accumulated in the training data holding unit 101) for each sensitive attribute (step S202), and determines whether the data is biased to a specific attribute value for each sensitive attribute, that is, whether there is data bias (step S203).

As a result of classifying the training data into each sensitive attribute, in a case where, regarding a certain sensitive attribute $s_i$, the ratio of the number of pieces of training data in which $s_i = 1$ (that is, a major attribute) to the number of pieces of training data in which $s_i = 0$ (that is, a minor attribute) is equal to or greater than a predetermined threshold, the data bias determination unit 121 determines that there is data bias for the sensitive attribute $s_i$.

In the present embodiment, the threshold for data bias determination for each sensitive attribute and an attribute to be treated as sensitive can be specified by a user operation via, for example, the UI or the like.

Here, in a case where the data bias determination unit 121 determines that there is data bias (Yes in step S203), the data supplementation unit 122 supplements the data of the minor attribute of the sensitive attribute determined to have data bias (step S204), and accumulates the data in the training data holding unit 101.

In step S204, data of the minor attribute is artificially increased from the training data. According to the method of artificially increasing data of the minor attribute, the work is easier than in the case of manual adjustment, and the hurdle for obtaining the consent of the person himself/herself is also lowered. Specifically, the data supplementation unit 122 automatically generates data of the minor attribute by using the GAN algorithm.

Then, the model training unit 102 trains the machine learning model to be trained by using the training data in which there is no data bias or the data bias is eliminated, and updates the machine learning model (step S205). Hereinafter, a case where the machine learning model includes a convolutional neural network will be described as a main example. Furthermore, the model training unit 102 calculates a loss function defined on the basis of an error from the known correct answer label corresponding to the input data, and performs training by backpropagation so as to minimize the loss function. However, the present disclosure is not limited to a specific learning algorithm. Then, the model training unit 102 stores the model parameter obtained as a training result, in the model parameter holding unit 103.

Next, the inference phase will be described. The data input unit 112 inputs data to be inferred. The data input unit 112 inputs, for example, sensor information obtained by a sensor included in the edge device as data to be inferred. The input data processing unit 113 executes data processing in such a way that the data input from the data input unit 112 has the data format that can be input to the machine learning model to be trained, and inputs the data to the inference unit 111. Then, the inference unit 111 outputs a label inferred from the input data by using the model in which the model parameter read from the model parameter holding unit 103 is set, that is, the trained model (step S211).

Next, the model bias determination unit 123 analyzes the results of inference performed by the inference unit 111 using the trained model, and determines whether or not fairness of the trained model is ensured, that is, model bias (step S212). The model bias determination unit 123 checks whether or not the results of inference by the trained model are biased according to the difference in the sensitive attributes of the input data (for example, whether the disadvantageous inference results are one-sided depending on a difference in race or gender). For example, the model bias determination unit 123 may start the model bias determination processing at every predetermined number of times of inference, or may start the model bias determination processing at a predetermined time interval.

The model bias determination unit 123 determines whether the inference by the trained model for each sensitive attribute is fair. In a case where, regarding a certain sensitive attribute $s_i$, a difference in ratios of the labels inferred between the attribute of $s_i = 1$ (that is, the major attribute) and the attribute of $s_i = 0$ (that is, the minor attribute) exceeds a threshold, the model bias determination unit 123 determines that the trained model is unfair, that is, there is model bias. In the present embodiment, the threshold for model bias determination can be set by a user operation via a UI, for example.

Then, in a case where the model bias determination unit 123 determines that there is model bias (Yes in step S213), the model bias mitigation unit 124 executes the model bias mitigation algorithm and the model training unit 102 may mitigate the model bias for the trained model (step S214).

After the model bias mitigation processing in step S214 is executed, the processing returns to step S211, and inference using the machine learning model after model bias mitigation and model bias determination are repeatedly performed. Then, in a case where it is determined that there is no model bias (No in step S213), it is determined that a fair machine learning model without bias is obtained, and the processing ends.

C. Configuration of Machine Learning Model

The machine learning model includes, for example, a neural network, but may be a model using a type such as support vector regression or Gaussian process regression (described above). In the present specification, an embodiment to which a convolutional neural network (CNN) is applied will be described. In this section C, the configuration of the convolutional neural network will be described.

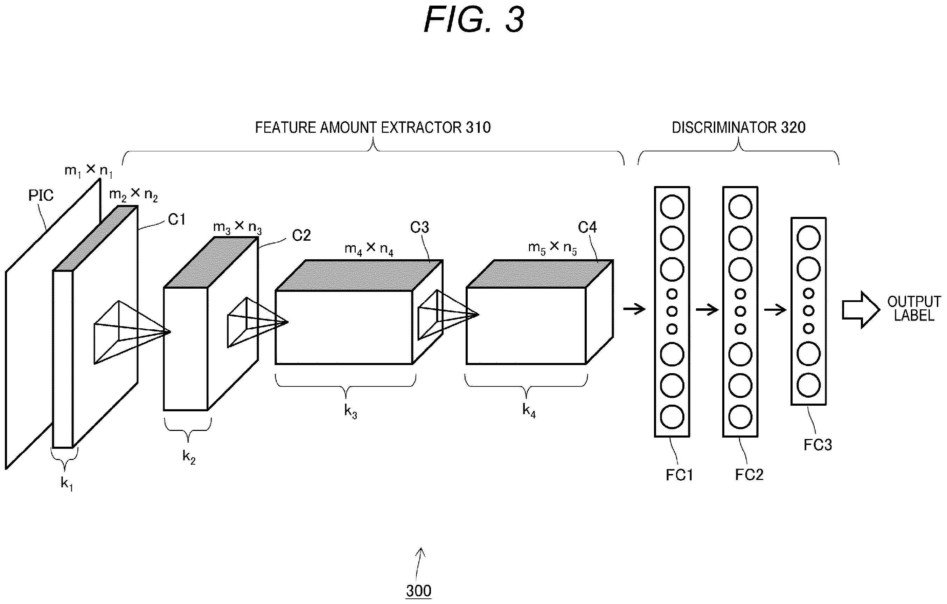

Fig. 3 schematically illustrates a structure of a convolutional neural network 300. The illustrated convolutional neural network 300 includes, for example, a feature amount extractor 310 including a plurality of stages of convolutional layers and pooling layers and a discriminator 320, which is a neural network (fully connected layer). In the feature amount extractor 310 in a preceding stage of the discriminator 320, a feature of the input image is extracted by the convolutional layers and the pooling layers. In each convolutional layer, a local filter that extracts a feature of an image is applied to the input image while being moved, and the feature is extracted from the input image. Furthermore, each pooling layer compresses an image feature input from the immediately preceding convolutional layer.

The feature amount extractor 310 includes four stages of convolutional layers and pooling layers. Assuming that a first-stage convolutional layer C1, a second-stage convolutional layer C2, a third-stage convolutional layer C3, and a fourth-stage convolutional layer C4 are disposed in this order from a side closer to an input image PIC, resolution of processed images is smaller and the number of feature maps (number of channels) is larger in later stages. More specifically, assuming that resolution of the input image PIC is $m_2 \times n_1$, resolution of the first-stage convolutional layer C1 is $m_2 \times n_2$, resolution of the second-stage convolutional layer C2 is $m_3 \times n_3$, resolution of the third-stage convolutional layer C3 is $m_4 \times n_4$, and resolution of the fourth-stage convolutional layer C4 is $m_5 \times n_5$ ($m_2 \times n_2 < m_2 \times n_2 \leq m_3 \times n_3 \leq m_4 \times n_4 \leq m_5 \times n_5$). Furthermore, the number of feature maps of the first-stage convolutional layer C1 is $k_2$, the number of feature maps of the second-stage convolutional layer C2 is $k_2$, the number of feature maps of the third-stage convolutional layer C3 is $k_3$, and the number of feature maps of the fourth-stage convolutional layer C4 is $k_4$ ($k_2 \leq k_2 \leq k_3 \leq k_4$, but $k_2$ to $k_4$ are not the same). Note that illustration of the pooling layers is omitted in Fig. 3.

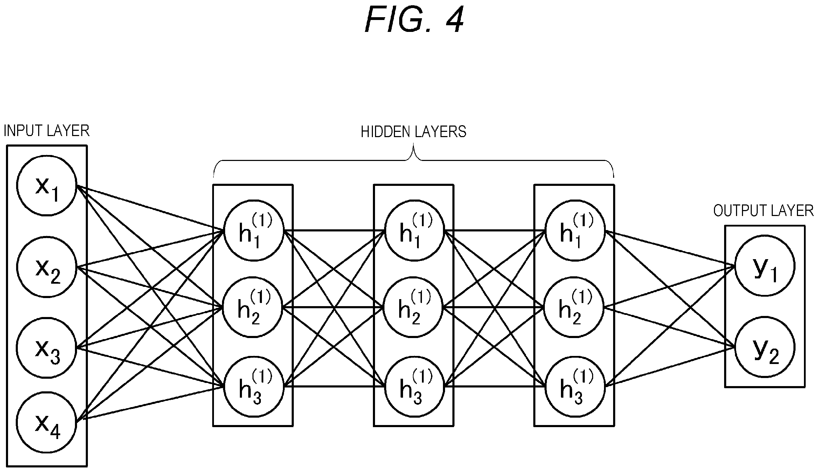

The discriminator 320 includes a fully connected layer which includes an input layer FC1, one or more hidden layers FC2, and an output layer FC3, and in which all nodes of each layer are connected with all nodes of the subsequent layer. Outputs of the fourth-stage convolutional layer C4 of the feature extractor 310 are arranged one-dimensionally and used as inputs to the fully connected layer. For simplification of the description, when the fully connected layer is simplified as illustrated in Fig. 4 (there are three hidden layers), for example, the coupling portion between the input layer and the first hidden layer is expressed by the following formula (1). The coupling portions of the other layers are similarly expressed.
[Math. 1]

$$h_j^{(1)} = w_1 x_1 + w_2 x_2 + w_3 x_3 + w_4 x_4 \qquad \cdots (1)$$

$y_1$ and $y_2$ of the output layer in Fig. 4 correspond to output labels output from the convolutional neural network. Furthermore, coefficients $w_1$, $w_2$, $w_3$, and $w_4$ in the above formula (1) are coupling weights of coupling portions between corresponding nodes. In the training phase of the convolutional neural network, the model training unit 102 updates the weight coefficients $w_1$, $w_2$, $w_3$, $w_4$, ... so that the correct answer label y is output for the input data x by a learning algorithm such as backpropagation.

D. Determination of Data Bias

As a result of classifying the training data into each sensitive attribute, in a case where, regarding a certain sensitive attribute $s_i$, the ratio of the number of pieces of training data in which $s_i = 1$ to the number of pieces of training data in which $s_i = 0$ is equal to or greater than a predetermined threshold, it is assumed that there is data bias for the sensitive attribute $s_i$.

For example, in a case where gender is defined as the first sensitive attribute $s_1$, the male is defined as "$s_1 = 1$", and the female is defined as "$s_1 = 0$", if the model training unit 102 performs training while leaving data bias in which the number of pieces of training data that satisfies "$s_1 = 0$" is significantly smaller than the number of pieces of training data that satisfies "$s_1 = 1$" among the pieces of training data accumulated in the training data holding unit 101, there is a possibility that an unfair machine learning model is generated in which inference can be accurately made with respect to the major attribute that satisfies "$s_1 = 1$" but inference cannot be accurately made with respect to the minor attribute that satisfies "$s_1 = 0$".

Similarly, in a case where race is defined as the second sensitive attribute $s_2$, a white is defined as "$s_2 = 1$", and a black is defined as "$s_2 = 0$", if the model training unit 102 performs training while leaving data bias in which the number of pieces of training data that satisfies "$s_2 = 0$" is significantly smaller than the number of pieces of training data that satisfies "$s_2 = 1$" among the pieces of training data accumulated in the training data holding unit 101, there is a possibility that an unfair machine learning model is generated in which inference can be accurately made with respect to the major attribute that satisfies "$s_2 = 1$" but inference cannot be accurately made with respect to the minor attribute that satisfies "$s_2 = 0$".

In order to determine whether data x collected for the sensitive attribute in the data bias determination processing is biased, the training data collection unit 130 may simultaneously acquire an attribute label indicating the sensitive attribute of each data x at the stage of acquiring the data x. Of course, the sensitive attribute of the acquired data x may be determined after the data x is acquired. The training data collection unit 130 or a functional module, not illustrated, may determine the sensitive attribute of the acquired data x by using AI, or may determine the sensitive attribute by using any other algorithm.

For example, in the case of personal information that is highly necessary to be considered, labeling may be performed on the basis of quantitative information obtained by analysis of image data or the like without labeling the sensitive attribute by directly using the personal information. Specifically, the sensitive attribute may be labeled using an individual typology angle (ITA) score of the face image as the input data instead of labeling with the personal information that needs to be considered such as race. The ITA score is known as a value that characterizes the color of the subject's skin measured by a skin contact reflex spectrophotometer or a skin colorimeter.

E. Data Generation Using GAN

In a case where the data bias determination unit 121 outputs the determination result indicating that there is data bias, the data supplementation unit 122 artificially increases the data of the minor attribute from the training data that has already been acquired (is accumulated in the training data holding unit 101). According to the method of artificially increasing data of the minor attribute, the work is easier than in the case of manual adjustment, and the hurdle for obtaining the consent of the person himself/herself is also lowered.

Specifically, the data supplementation unit 122 automatically generates data of the minor attribute by using the GAN algorithm. The GAN is an algorithm for deepening learning of input data by causing a generator and a discriminator each including a neural network to compete with each other.

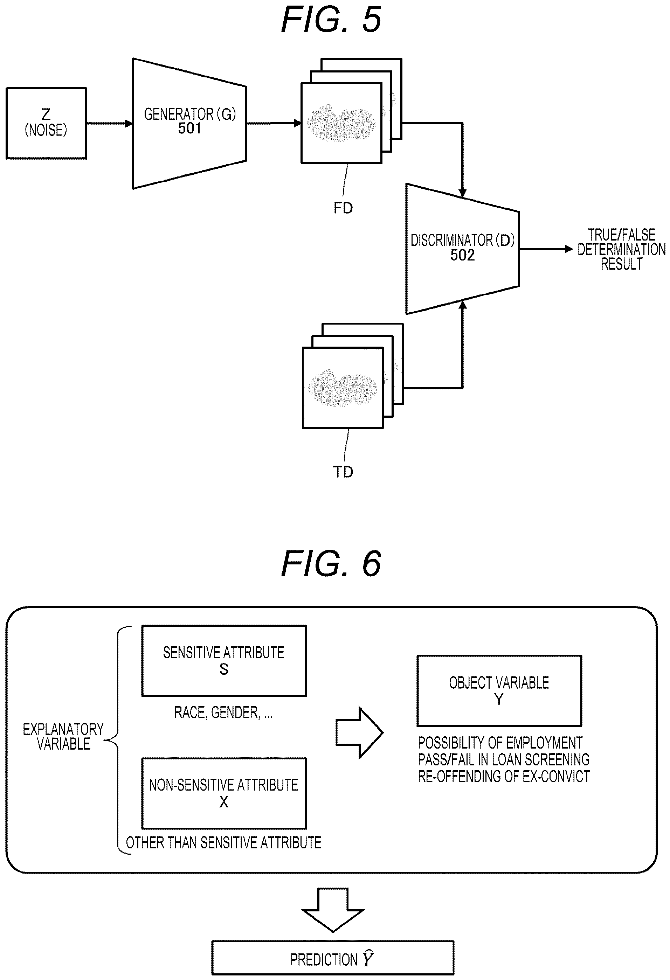

Here, the GAN algorithm will be briefly described with reference to Fig. 5. The GAN uses a generator (G) 501 and a discriminator (D) 502. The generator 501 and the discriminator 502 each include a neural network model. The generator 501 adds noise (random latent variable z) to the input image to generate a false image FD (false data). In contrast, the discriminator 502 identifies true/false of the real image TD (true data) and the image FD generated by the generator 501. Then, the generator 901 and the discriminator 502 learn while competing with each other so that the generator 901 makes it difficult for the discriminator 502 to determine truth or falsehood and the discriminator 502 can correctly determine whether an image generated by the generator 501 is true or false. Thus, the generator 501 can generate an image that cannot be determined to be true or false.

Specifically, the data supplementation unit 122 artificially generates data of the minor attribute by using StyleGAN2 (see, for example, Non-Patent Document 1) obtained by further improving StyleGAN that has achieved high-resolution image generation using progressive growing, thereby eliminating data imbalance between the attributes.

F. Fairness of Machine Learning Model

In supervised learning of a machine learning model, a variable to be obtained (or to be predicted) is an object variable y, and a variable acting on the object variable is an explanatory variable. For example, in a case where pass/fail in a company recruitment test, a re-offending rate of an ex-convict, pass/fail in loan screening, and the like are used as object variables, various attribute information of the subject such as race, ethnicity, gender, age, and religion are used as explanatory variables. The explanatory variables are roughly divided into sensitive attributes s and non-sensitive attributes x other than the sensitive attributes. Generally, race, ethnicity, gender, and the like are considered as sensitive attributes. Of course, the definition of the sensitive attribute may be appropriately changed as necessary, or the sensitive attribute may be specified by a user operation via a UI or the like.

Fig. 6 schematically illustrates the mechanism of the machine learning model. The machine learning model is trained to output the object variable y from the explanatory variables including the sensitive attribute s and the non-sensitive attribute x. Then, the fact that the distribution of the prediction y^ output from the trained model does not change depending on the sensitive attribute (alternatively, the difference in distribution due to the sensitive attribute is within a predetermined threshold) is the fairness of the trained model referred to in the present specification. Note that a symbol "^" added above the variable y in Fig. 6 indicates that the variable y is prediction. In the present specification, the predicted value or estimated value of the variable y is expressed as "y^" by directly placing the symbol "^" immediately after the variable y.

As described above, in order to prevent the fairness of the machine learning model from being threatened due to "data bias" in which training data is biased to a specific sensitive attribute, in the present disclosure, the data bias is mitigated by performing supplementation of training data of a minor attribute (specifically, generation of training data of the minor attribute by the GAN). Nevertheless, "model bias" in which prediction made by the trained model is biased can occur. When a difference in advantage or disadvantage occurs in the prediction result between groups or individuals due to model bias, the fairness of the trained model is not maintained.

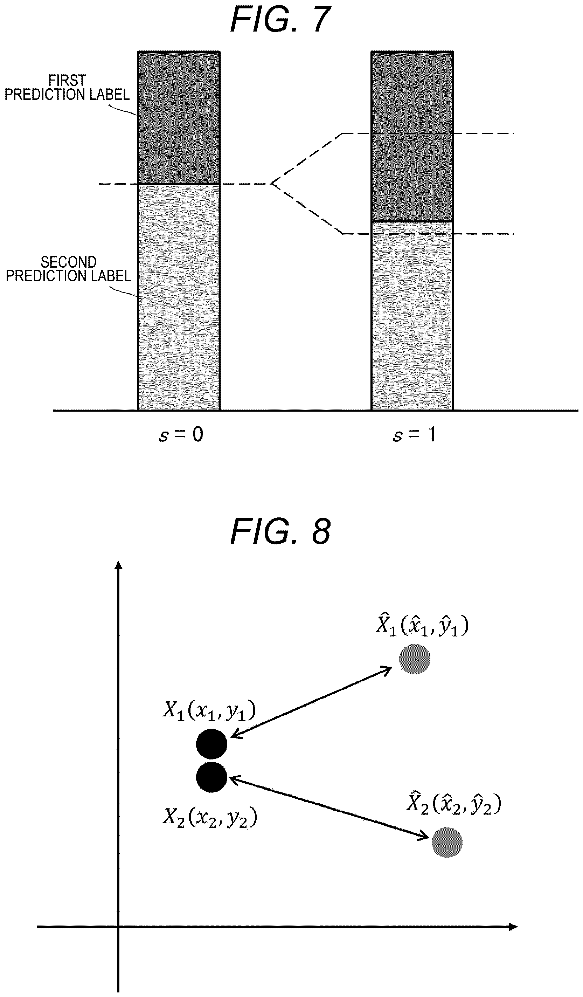

Fig. 7 illustrates fairness of prediction made by a trained model between groups belonging to a certain sensitive attribute s. In Fig. 7, ratios of the first prediction label to the second prediction label output by the trained model in the group of the sensitive attribute s = 0 and the group of s = 1 are compared with each other. In the illustrated example, the percentage of the positive prediction results that have been output is higher in the group of s = 0. In the present embodiment, when the difference Δ between the ratios of the prediction results in the respective groups of s = 0 and s = 1 is within a predetermined threshold, it is regarded that fairness between the groups is secured. In contrast, in a case where the difference Δ between the ratios exceeds the predetermined threshold, fairness between the groups is not secured, and the trained model is treated as having model bias. Note that the threshold for determining the presence or absence of model bias can be specified by a user operation via a UI or the like.

Furthermore, Fig. 8 illustrates fairness of prediction made by the trained model between individuals. In Fig. 8, a target user X(x, y) and a prediction result Y^(x^, y^) of the user X by the trained model are illustrated on the same two-dimensional plane. It is assumed that the trained model performs prediction for two users $X_1(x_1, y_1)$ and $X_2(x_2, y_2)$ having the same ability, and prediction results of $Y_1{^\wedge}(x_1{^\wedge}, y_1{^\wedge})$ and $Y_2{^\wedge}(x_2{^\wedge}, y_2{^\wedge})$ are obtained for the users. If the two users $X_1$ and $X_2$ have the same ability, similar prediction results should be obtained. However, if the distance Δ between the prediction results $Y_1{^\wedge}(x_1{^\wedge}, y_1{^\wedge})$ and $Y_2{^\wedge}(x_2{^\wedge}, y_2{^\wedge})$ of the two users exceeds a predetermined threshold due to model bias, it is unacceptably unfair.

For example, in a case where distribution of prediction scores changes depending on a sensitive attribute such as race or gender in prediction of pass/fail in a company recruitment test, a re-offending rate of an ex-convict, pass/fail in loan screening, or the like, social bias is not excluded from the trained model, and thus the trained model is unfair.

In the training system 100 according to the present embodiment, the model bias determination unit 123 analyzes the results of inference made by the inference unit 111 using the trained model, and determines fairness of the trained model (described above). The model bias determination unit 123 may also determine the fairness between individuals, for example, whether or not the difference in the estimation results of the trained model is large for individuals having the same ability. However, in the present specification, fairness between groups will be mainly described.

For example, the model bias determination unit 123 aggregates the inference results by the trained model, and determines model bias on the basis of whether or not a predefined definition of fairness is satisfied. The model bias determination unit 123 may determine model bias by using one or a plurality of definitions designated by the user through a UI operation or the like from among several types of fairness definitions prepared in advance. Furthermore, the user may be allowed to specify the definition of fairness via a UI operation or the like. For example, the user may specify the definition of the fairness according to the task of the machine learning model.

In the field, for example, definitions of fairness such as demographic parity, equalized odds, and equal opportunity are known.

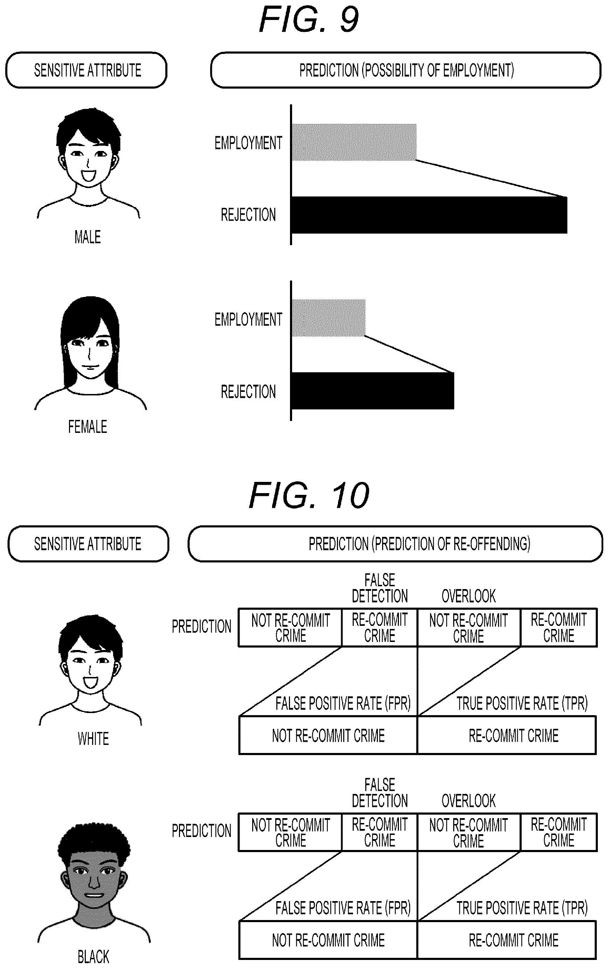

Demographic parity is a definition of fairness in which the same predicted distribution should be used regardless of the sensitive attribute. For example, in human resources recruitment by a company, as illustrated in Fig. 9, the definition of fairness is that the ratio of employment to rejection is the same regardless of the sensitive attribute "gender" (alternatively, a difference between the ratios is equal to or less than a predetermined threshold), and the ratio of prediction labels is a criterion of fairness. Assuming that the predicted value obtained by the trained model is Y^ and the sensitive attribute is S, demographic parity is expressed by the following Formula (2).

[Math. 2]

$$P\left(\hat{Y}\middle|S=0\right) = P\left(\hat{Y}\middle|S=1\right) \qquad \cdots (2)$$

Furthermore, equalized odds is a definition of fairness in which the ratio of a true positive rate (TPR) to a false positive rate (FPR) is the same regardless of the sensitive attribute (alternatively, a difference between the ratios is equal to or less than a predetermined threshold). For example, in prediction as to whether or not an ex-convict will re-commit a crime, as illustrated in Fig. 10, it is the criterion of fairness that the ratio of the false positive rate (FPR) at which it was erroneously detected that the ex-convict would re-commit a crime even though he/she hasn't, to the true positive rate (TPR) at which it was predicted that the ex-convict would re-commit a crime and the ex-convict has actually re-committed a crime is the same regardless of the sensitive attribute "race" (alternatively, the difference between the ratios is equal to or less than a predetermined threshold). Assuming that a target (whether or not a certain event has actually occurred) is Y, the predicted value obtained by the trained model is Y^, the sensitive attribute is S, and y belongs to {0,1}, equalized odds is expressed by the following Formula (3).

[Math. 3]

$$P\left(\hat{Y}=1\middle|S=0, Y=y\right) = P\left(\hat{Y}=1\middle|S=1, Y=y\right) \qquad \cdots (3)$$

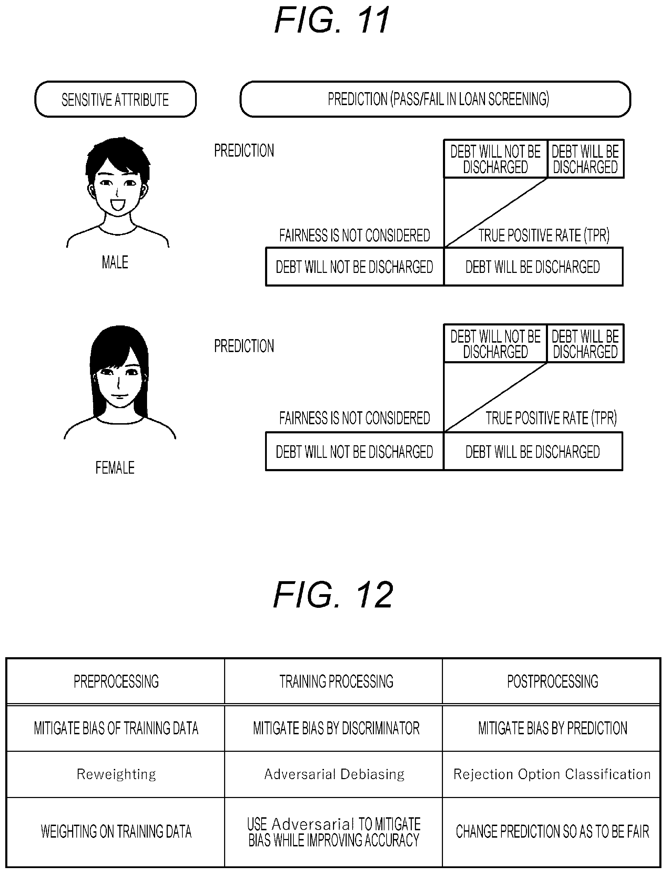

Furthermore, equal opportunity is a definition of fairness in which the ratio of the true positive rate (TPR) is the same regardless of the sensitive attribute (alternatively, a difference between the ratios is equal to or less than a predetermined threshold), and the ratio of the FPR is not taken into consideration unlike equalized odds. For example, in prediction as to whether or not a debtor of a loan discharges a debt, as illustrated in Fig. 11, it is the criterion of fairness that the ratio of the true positive rate (TPR) at which it was predicted that the debt would be discharged and the debt has actually been discharged is the same regardless of the sensitive attribute "gender" (alternatively, a difference between the ratios is equal to or less than a predetermined threshold). Unlike equalized odds described above, the ratio of the false positive rate (FPR) at which it was predicted that the debt would be discharged and the debt has actually not been discharged is not considered. Assuming that a target (whether or not a certain event has actually occurred) is Y, the predicted value obtained by the trained model is Y^, the sensitive attribute is S, and y belongs to {0,1}, equal opportunity is expressed by the following Formula (4).

[Math. 4]

$$P\left(\hat{Y} = 1 \middle| S = 0, Y = 1\right) = P\left(\hat{Y} = 1 \middle| S = 1, Y = 1\right) \qquad \cdots (4)$$

In addition to the above, there are definitions of fairness such as fairness through awareness in which "similar individuals should obtain similar predicted values" and fairness through unawareness in which "fairness should be achieved even if a sensitive attribute is not explicitly used".

G. Bias Mitigation in Machine Learning Model

In the field, for example, AI Fairness 360 (see Non-Patent Document 2) provided by IBM Corporation is known as an open source toolkit that detects and removes bias of a machine learning model. Meanwhile, it has been described that the training system 100 according to the present embodiment has a configuration in which the data supplementation unit 122 artificially generates data of a minor attribute by the GAN and mitigates the data bias, and the model bias mitigation unit 124 mitigates the bias of the trained model. Also in the present disclosure, with reference to AI Fairness 360, bias mitigation of the machine learning model may be performed in each of three stages of preprocessing, during training processing, and after training to realize fairness.

Fig. 12 summarizes bias mitigation processing performed in each stage of preprocessing, training processing, and after training.

In the preprocessing, bias mitigation of the training data held in the training data holding unit 101 is performed. In addition to a method in which the data supplementation unit 122 artificially generates data of a minor attribute by the GAN and mitigates the data bias, bias mitigation may be performed by reweighting, that is, weighting on training data. The preprocessing may be performed by the data supplying unit 122, or a functional module for preprocessing may be additionally arranged in the training system 100.

During the training processing, in the convolutional neural network (see Fig. 3) including the feature amount extractor and the discriminator, training is performed so that bias is mitigated by the discriminator. Specifically, bias mitigation is performed while improving accuracy of the classifier by using the adversarial debiasing algorithm. The bias mitigation processing during the training processing may be performed by the model bias mitigation unit 124.

After training, the bias of the trained model is mitigated by prediction. Specifically, prediction made by the trained model is changed to be fair by using the reject option classification algorithm. The bias mitigation processing after training may be performed by the model bias mitigation unit 124.

H. Operation Example

Some or all of the functions the training system 100 are constructed on a cloud or an arithmetic device capable of large-scale computation (described above). In this section H, an operation example will be described in which the model training unit 102 that handles a huge amount of data and needs high calculation ability is arranged in a server on a cloud, and the inference unit 111 that uses the trained model is arranged in an edge device such as a digital camera, a multifunctional information terminal such as a smartphone or a tablet, or a personal computer.

H-1. System Configuration and Operation

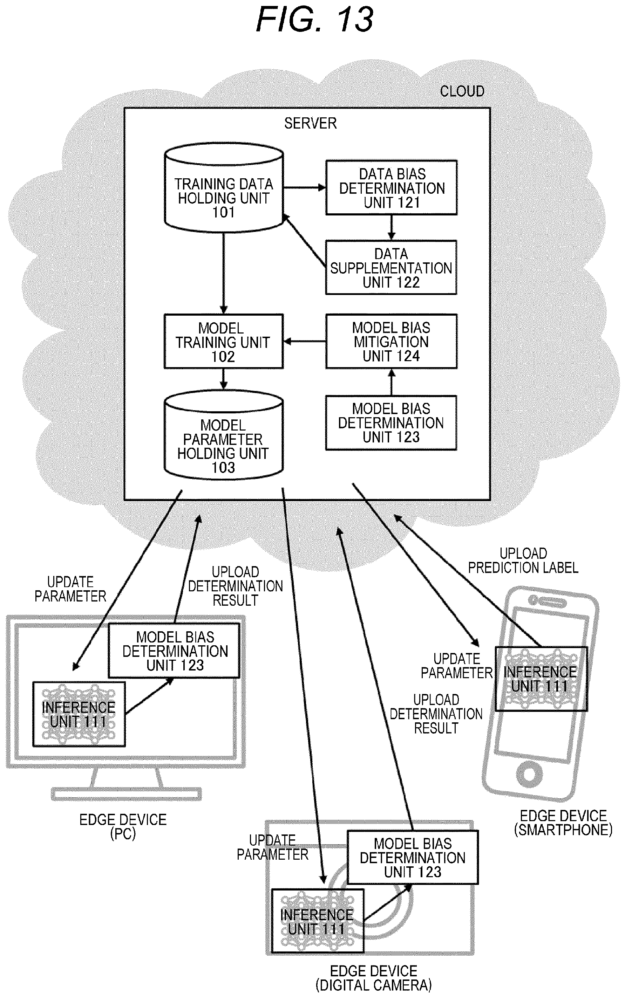

Fig. 13 illustrates an operation example of the training system 100. In the illustrated example, there are a server on a cloud and an infinite number of edge devices (clients) to which service is provided from the server.

In the server, functional modules including the model training unit 102, the functional modules being related to training processing of the machine learning model are arranged. On the server side, the model training unit 102 performs the training processing of the machine learning model and a model parameter obtained as a result is held in the model parameter holding unit 103. In contrast, there are a large number of edge devices including the inference units 111 on the cloud side. The edge device is a digital camera, a multifunctional information terminal such as a smartphone or a tablet, a personal computer, or the like. Each edge device includes the inference unit 111, and there is also an edge device further including the model bias determination unit 123.

The server provides the learned model parameter to each edge device. The form in which the model parameter is provided is variable. For example, the model parameter may be installed in advance at the time of shipping the edge device product. In addition, the edge device may download the model parameter from the server after product shipment. Furthermore, even after the start of use, the model parameter updated on the server side may be appropriately downloaded to the edge device as necessary. The update of the model parameter on the server side includes an update accompanying model bias mitigation, and it is a matter of course that the update of the model parameter on the server side may also include an update for other purposes.

In each edge device, the model parameter provided from the server is set in the inference unit 111, and prediction processing by the trained model is executed. A task performed by the trained model may be face detection or face identification from a captured image of a camera, and furthermore, may be determination of possibility of employment of an employee, pass/fail in loan screening, re-offending, or the like based on a face image.

The edge device including the model bias determination unit 123 analyzes the prediction result of the inference unit 111, determines whether or not the inference by the trained model for each sensitive attribute is fair, that is, whether or not model bias is present, and uploads the determination result to the server (alternatively, may notify the server only when it is determined that there is model bias). In addition, the edge device that does not include the model bias determination unit 123 may upload the prediction result of the inference unit 111 to the server, and the model bias determination unit 123 on the server side may perform the model bias determination processing.

The model bias mitigation unit 124 on the server side may execute a model bias mitigation algorithm in response to the determination result indicating that there is model bias, and the model training unit 102 performs mitigation of the model bias such as transfer learning, fine tuning, or incremental learning for the trained model. Then, the model parameter of the machine learning model in which model bias has been mitigated is accumulated in the model parameter holding unit 103 and further provided to each edge device.

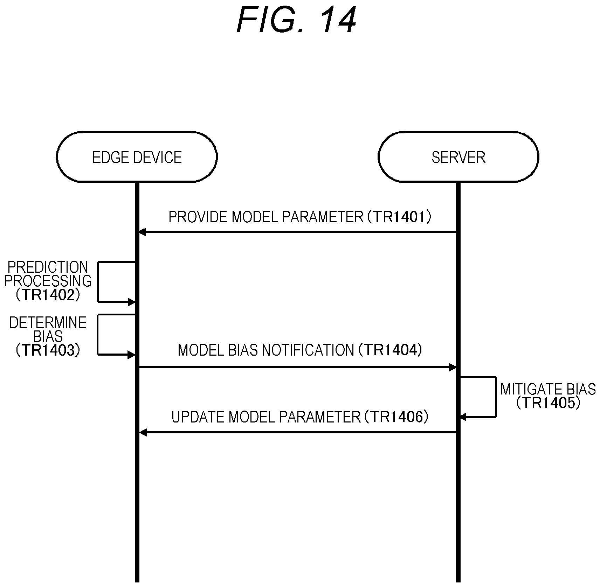

Fig. 14 schematically illustrates a transaction performed between the edge device and the server. In Fig. 14, for simplification of the drawing, the edge device and the server are illustrated in a one-to-one relationship, but in practice, one server implements similar transactions with a large number of edge devices.

First, the server provides the learned model parameter to the edge device (TR1401). Alternatively, the edge device acquires the model parameter from the server.

Thereafter, on the edge device side, the model parameter provided from the server is set in the model to be used by the inference unit 111, and prediction processing by the trained model is executed (TR1402). A task performed by the trained model may be face detection or face identification from a captured image of a camera, and furthermore, may be determination of possibility of employment of an employee, pass/fail in loan screening, re-offending, or the like based on a face image.

Then, on the edge device side, it is determined whether or not the inference by the trained model is fair, that is, whether or not there is model bias (TR1403), and the determination result is uploaded to the server (alternatively, the server may be notified only when it is determined that there is model bias) (TR1404). Furthermore, the edge device that does not include the model bias determination unit 123 may upload the prediction result of the trained model to the server, and the model bias determination unit 123 on the server side may perform the model bias determination processing.

On the server side, in response to the determination result indicating that there is model bias from the edge device (alternatively, by analyzing the determination result of the trained model received from the edge device), the model bias is mitigated for the trained model (TR1405). The server mitigates the model bias of the trained model by, for example, transfer learning, fine tuning, incremental learning, or the like.

Then, the server provides the model parameter after mitigating the model bias to the edge device (TR1406). For example, a new model parameter may be distributed from the server to the edge device in the form of product software update.

After the trained model is mounted on a product or a service and released, it is difficult to verify or correct the model. In contrast, according to the transaction as illustrated in Fig. 14, in an actual operation process after the release, bias of the trained model used in each product or service (that is, the edge device) can be verified, and furthermore, when model bias is detected, the model parameter in which the model bias is mitigated by performing retraining or fine tuning on the server side can be updated. Therefore, in a case where the problem of the fairness of the trained model becomes apparent in the actual operation, the model bias can be corrected.

H-2. Configuration of Edge Device

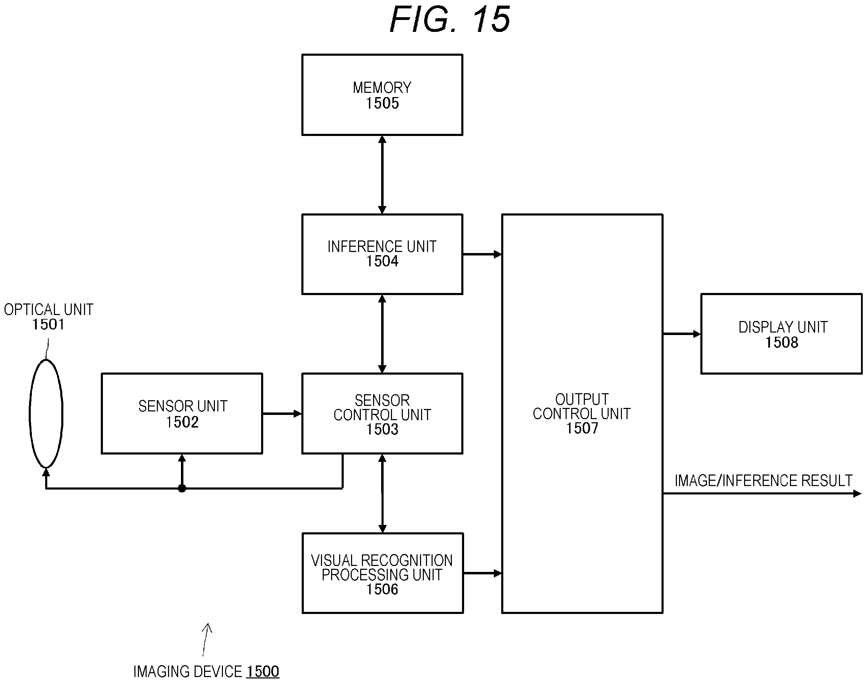

Fig. 15 schematically illustrates a functional configuration of an imaging device (for example, a digital camera) 1500 as an example of the edge device. The illustrated imaging device 1500 includes an optical unit 1501, a sensor unit 1502, a sensor control unit 1503, an inference unit 1504, a memory 1505, a visual recognition processing unit 1506, an output control unit 1507, and a display unit 1508. For example, a complementary metal oxide semiconductor (CMOS) image sensor can be formed by integrating the sensor unit 1502, the sensor control unit 1503, the inference unit 1504, and the memory 1505 by using a CMOS. However, the imaging device 1500 may be an infrared light sensor that captures an image with infrared light or another type of light sensor.

The optical unit 1501 includes, for example, a plurality of optical lenses that condenses light from a subject on a light receiving surface of the sensor unit 1502, a diaphragm mechanism that adjusts the size of an opening with respect to incident light, and a focus mechanism that adjusts the focus of irradiation light on the light receiving surface. The optical unit 1501 may further include a shutter mechanism that adjusts the time during which the light receiving surface is irradiated with light. The diaphragm mechanism, the focus mechanism, and the shutter mechanism included in the optical unit 1501 are configured to be controlled by, for example, the sensor control unit 1503. Note that the optical unit 1501 may be configured integrally with the imaging device 1500 or may be configured separately from the imaging device 1500.

The sensor unit 1502 includes a pixel array in which a plurality of pixels is arranged in a matrix. Each pixel includes a photoelectric conversion element, and a light receiving surface is formed by the pixels arranged in a matrix. The optical unit 1501 forms an image of incident light on the light receiving surface, and each pixel of the sensor unit 1502 individually outputs a pixel signal corresponding to irradiation light. The sensor unit 1502 further includes a drive circuit for driving each pixel included in the pixel array, and a signal processing circuit that performs predetermined signal processing on a signal read from each pixel and outputs the signal as a pixel signal of each pixel. The sensor unit 1502 outputs a pixel signal of each pixel included in a pixel region, as digital image data.

The sensor control unit 1503 includes a microprocessor, for example, controls reading of pixel data from the sensor unit 1502, and outputs image data based on the pixel signal read from each pixel. The pixel data output from the sensor control unit 1503 is passed to the inference unit 1504 and the visual recognition processing unit 1506. Furthermore, the sensor control unit 1503 generates an imaging control signal for controlling imaging in the sensor unit 1502, and supplies the imaging control signal to the sensor unit 1502. The imaging control signal includes information indicating exposure and analog gain at the time of imaging in the sensor unit 1502. The imaging control signal further includes a control signal for performing an imaging operation of the sensor unit 1502, such as a vertical synchronization signal or a horizontal synchronization signal. Furthermore, the sensor control unit 1503 generates control signals to the diaphragm mechanism, the focus mechanism, and the shutter mechanism, and supplies the control signals to the optical unit 1501.

The inference unit 1504 corresponds to the "inference unit 111" illustrated in Fig. 1. The model parameter supplied from the server is stored in the memory 1505, and the inference unit 1504 uses the trained model in which the model parameter read from the memory 1505 is set to perform inference on the pixel data passed from the sensor control unit 1503. Inference may include recognition processing of an object included in an image based on pixel data (person detection, face identification, image classification, and the like), and furthermore, various predictions such as personnel acceptance/rejection determination, determination of a re-offending rate, and loan screening. However, the inference unit 1504 may make an inference by using image data after the visual recognition processing by the visual recognition processing unit 1506. The recognition result of the inference unit 1504 is passed to the output control unit 1507.

The visual recognition processing unit 1506 executes processing for obtaining an image suitable for visual recognition by humans on the pixel data passed from the sensor control unit 1503, and outputs image data including a group of pieces of pixel data, for example. For example, in a case where a color filter is provided for each pixel included in the sensor unit 1502, and each piece of pixel data has color information of any of red (R), green (G), or blue (B), the visual recognition processing unit 1506 executes demosaic processing, white balance processing, and the like. Furthermore, the visual recognition processing unit 1506 can instruct the sensor control unit 1503 to read pixel data necessary for the visual recognition processing from the sensor unit 1502. The visual recognition processing unit 1506 passes the image data obtained by processing the pixel data, to the output control unit 1507. For example, by an image signal processor executing a program stored in advance in a local memory (not illustrated), the above-described function of the visual recognition processing unit 1506 is implemented.

The output control unit 1507 includes, for example, a microprocessor. The output control unit 1507 receives image data as a result of the visual recognition processing from the visual recognition processing unit 1506, and executes processing for displaying the image data on the display unit 1508 or outputting the image data to the outside of the imaging device 1500. The user can visually recognize a display image on the display unit 1508. The display unit 1508 may be built in the imaging device 1500 or may be externally connected to the imaging device 1500.

Furthermore, a result of inference or prediction about the image data is passed from the inference unit 1504 to the output control unit 1507. In a case where the output control unit 1507 has the function of the "model bias determination unit 123" illustrated in Fig. 1, the output control unit 1507 analyzes a result of inference or prediction made by the inference unit 1504 using the trained model, determines whether or not fairness of the trained model is secured, that is, the model bias, and outputs the determination result to the outside (for example, uploads the determination result to the server).

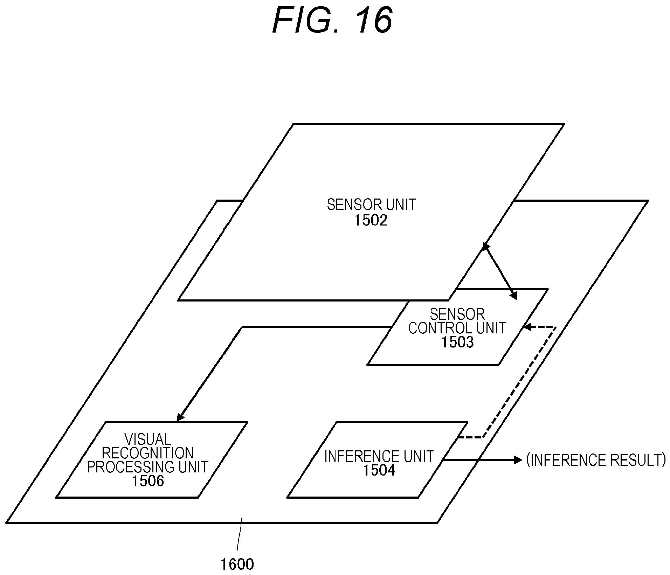

Fig. 16 illustrates a hardware implementation example of the imaging device 1500. In the example illustrated in Fig. 16, the sensor unit 1502, the sensor control unit 1503, the inference unit 1504, the memory 1505, the visual recognition processing unit 1506, and the output control unit 1507 are mounted on one chip 900. However, in Fig. 16, illustration of the memory 1505 and the output control unit 1507 is omitted in order to prevent confusion of the drawing. In the configuration example illustrated in Fig. 16, a recognition result obtained by the inference unit 1504 is output to outside the chip 900 via the output control unit 1507. Furthermore, the inference unit 1504 can acquire pixel data or image data to be used for recognition, from the sensor control unit 1503 via an interface inside the chip 1600.

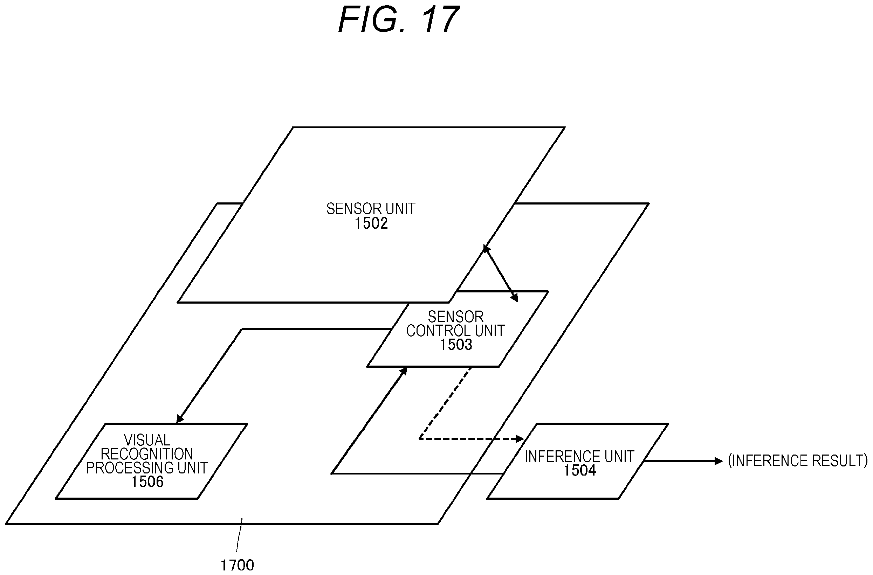

Fig. 17 illustrates another hardware implementation example of the imaging device 1500. In the example illustrated in Fig. 17, the sensor unit 1502, the sensor control unit 1503, the visual recognition processing unit 1506, and the output control unit 1507 are mounted on one chip 1700, and the inference unit 1504 and the memory 1505 are arranged outside the chip 1700. However, also in Fig. 17, illustration of the memory 1505 and the output control unit 1507 is omitted in order to prevent confusion of the drawing. In the configuration example illustrated in Fig. 17, the inference unit 1504 acquires pixel data or image data to be used for recognition, from the output control unit 1507 via a communication interface between chips. Furthermore, the inference unit 1504 directly outputs the recognition result to outside. Of course, a configuration may be adopted in which the recognition result obtained by the inference unit 1504 is returned to the output control unit 1507 in the chip 1700 via the communication interface between the chips, and is output from the output control unit 1507 to outside the chip 1700.

In the configuration example illustrated in Fig. 16, since both the inference unit 1504 and the sensor control unit 1503 are mounted on the same chip 1600, communication between the inference unit 1504 and the sensor control unit 1503 can be performed at a high speed via the interface in the chip 1600. In contrast, in the configuration example illustrated in Fig. 17, since the inference unit 1504 is arranged outside the chip 1700, replacement of the inference unit 1504 is easy, and a trained model can be exchanged by replacement. However, it is necessary to perform communication between the inference unit 1504 and the sensor control unit 1503 via the interface between the chips, which lowers the speed.

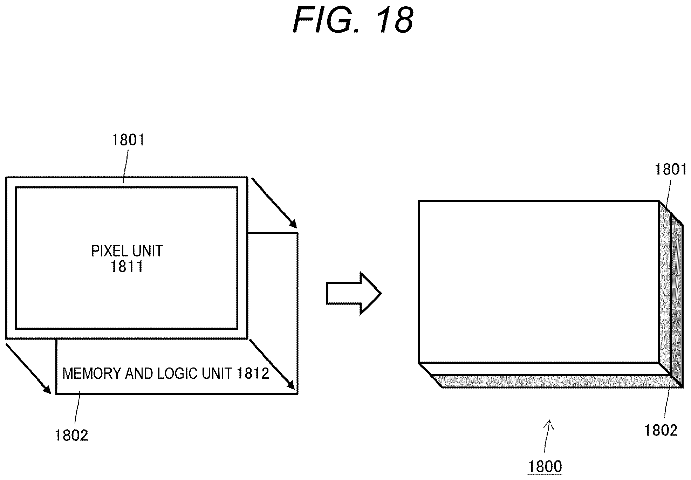

Fig. 18 illustrates an example in which the semiconductor chip 1600 (or 1700) of the imaging device 1500 is formed as a stacked image sensor 1800 having a two-layer structure in which two layers are stacked. In the illustrated structure, a pixel unit 1811 is formed in a semiconductor chip 11501 of a first layer, and a memory and logic unit 1812 is formed in a semiconductor chip 11502 of a second layer. The pixel unit 1811 includes at least a pixel array in the sensor unit 1502. Furthermore, the memory and logic unit 1812 includes, for example, the sensor control unit 1503, the inference unit 1504, the memory 1505, the visual recognition processing unit 1506, the output control unit 1507, and an interface that performs communication between the imaging device 1500 and outside. The memory and logic unit 1812 further includes a part or all of the drive circuit that drives the pixel array in the sensor unit 1502. Furthermore, although not illustrated in Fig. 18, the memory and logic unit 1812 may further include, for example, a memory used by the visual recognition processing unit 1506 for processing image data. As illustrated on the right side of Fig. 18, the imaging device 1500 is configured as one solid-state imaging element by bonding the semiconductor chip 11501 of the first layer and the semiconductor chip 11502 of the second layer while electrically contacting each other.

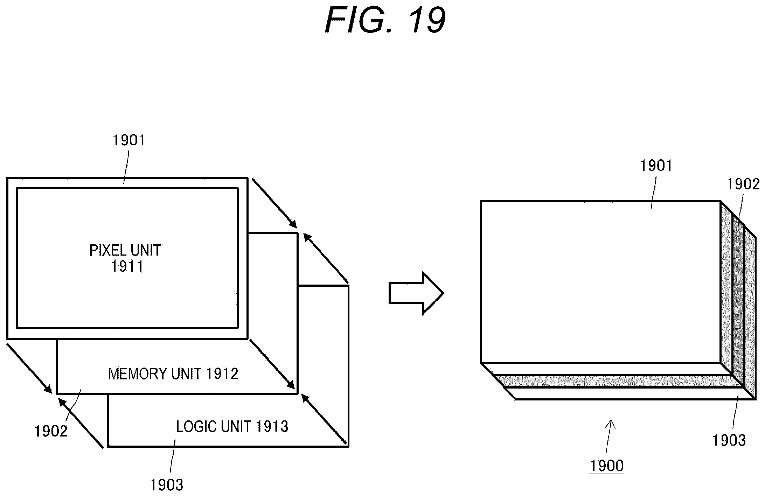

Fig. 19 illustrates an example in which the semiconductor chip 1600 (or 1700) of the imaging device 1500 is formed as a stacked image sensor 1900 having a three-layer structure in which three layers are stacked. In the illustrated structure, a pixel unit 1911 is formed in a semiconductor chip 1901 of a first layer, a memory unit 1912 is formed in a semiconductor chip 1902 of a second layer, and a logic unit 1913 is formed in a semiconductor chip 1903 of a third layer. The pixel unit 1911 includes at least a pixel array in the sensor unit 1502. Furthermore, the logic unit 1913 includes, for example, the sensor control unit 1503, the inference unit 1504, the visual recognition processing unit 1506, the output control unit 1507, and an interface that performs communication between the imaging device 1500 and outside. The logic unit 1913 further includes a part or all of the drive circuit that drives the pixel array in the sensor unit 1502. Furthermore, in addition to the memory 1505, the memory unit 1912 may further include, for example, a memory used by the visual recognition processing unit 1506 for processing image data. As illustrated on the right side of Fig. 19, the imaging device 1500 is configured as one solid-state imaging element by bonding the semiconductor chip 1901 of the first layer, the semiconductor chip 1902 of the second layer, and the third semiconductor chip 1903 while electrically contacting each other.

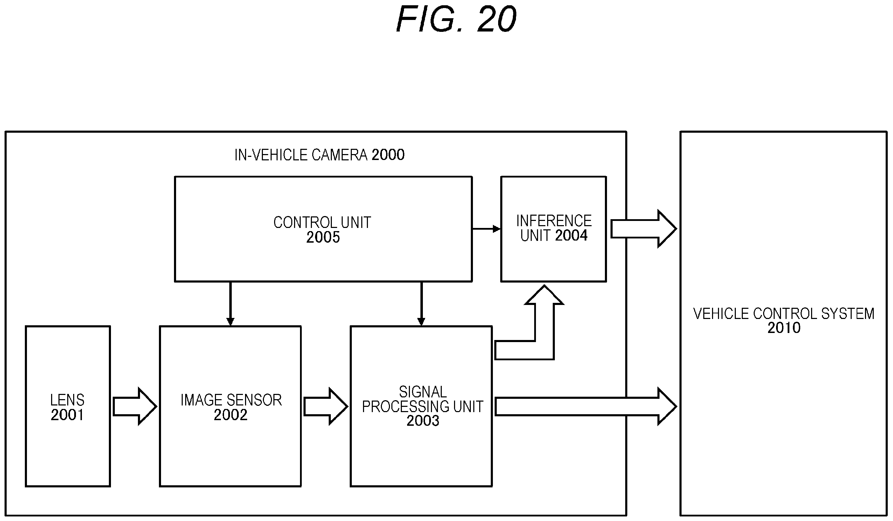

Fig. 20 schematically illustrates a functional configuration example of an in-vehicle camera 2000 as another example of the edge device. The illustrated in-vehicle camera 2000 includes a lens 2001, an image sensor 2002, a signal processing unit 2003, an inference unit 2004, and a control unit 2005.

The image sensor 2002 includes, for example, an element such as a CMOS, and captures an image formed on an imaging surface by the lens 2001. The signal processing unit 2003 performs signal processing on RAW data output from the image sensor 2002. The signal processing performed in the signal processing 2003 corresponds to, for example, demosaicing, noise reduction, white balance adjustment, gamma correction, sensor spectral correction, YC conversion, and the like.

The inference unit 2004 corresponds to the "inference unit 111" illustrated in Fig. 1. The inference unit 2004 makes an inference on the captured image processed by the signal processing unit 2003 by using the trained model in which the model parameter provided from the server is set. For inference, the inference unit 2004 recognizes various objects such as, for example, a motorcycle, a bicycle, a pedestrian, a road sign, a traffic light, a lane, a median strip, a guardrail, a street tree, and a street lamp, and further predicts itself such as collision.

The control unit 2005 integrally controls an operation of each unit in the in-vehicle camera 2000. The control unit 2005 controls, for example, an imaging operation in the image sensor 2002 and signal processing in the signal processing unit 1503. Furthermore, the control unit 2005 controls driving of the host vehicle through a control system 2010 in the subsequent stage on the basis of the object recognition result in the inference unit 2004 and the prediction result of an accident or the like.

In a case where the control unit 2005 has the function of the "model bias determination unit 123" illustrated in Fig. 1, the control unit 2005 analyzes a result of inference or prediction made by the inference unit 2004 using the trained model, determines whether or not fairness of the trained model is secured, that is, the model bias, and outputs the determination result to the outside (for example, uploads the determination result to the server).

The vehicle control system 2010 controls operation of the host vehicle, on the basis of an image captured by the image sensor 2002 and developed by the signal processing unit 2003 under the control of the control unit 2005 and on the basis of a recognition result or a prediction result obtained by the inference unit 2004. The vehicle control described herein includes vehicle control for automated driving or ADAS such as, for example, adaptive cruise control (ACC), lane departure warning (LDW), lane keeping assist (LKA), automatic emergency braking (AEB), and blind spot detection (BSD), and further includes drive control of each drive unit such as an active cornering light (ACL), a brake actuator (BRK), and a steering device (STR).

I. Application Example

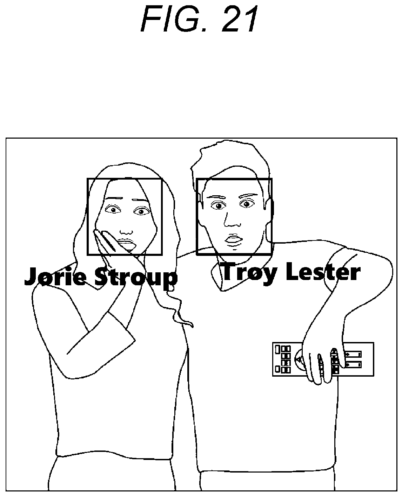

In this Section I, an application example in which the training system 100 according to the present disclosure is applied to name learning will be described. The "name learning" mentioned in the present specification is a task of detecting a face in content and identifying the name of the person with the face by a face recognizer by collation with a database. The machine learning model having learned names can be used as a name display system that displays the name of a person appearing in various contents such as a movie or a TV drama. Fig. 21 illustrates an example in which the names "Troy Lester" and "Jorie Stroup" of the detected faces in the image are displayed using such a name display system.

Here, accuracy of face recognition and accuracy of name display differ depending on a difference in sensitive attributes such as race (or skin color) and gender, and fairness becomes a problem. For example, if accuracy is lower in black people than in white people and is lower in women than in men (for example, a black woman's name appearing in the content tends to be mistaken), this leads to problems of racism and gender discrimination.

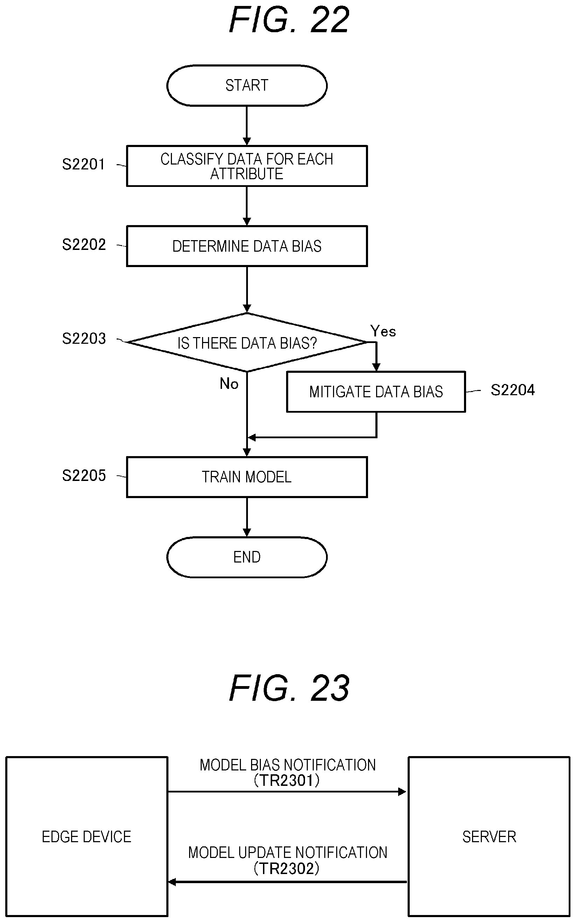

Therefore, in the present disclosure, in the model training stage, training is performed after the bias of the training data is mitigated, thereby ensuring fairness of the model. Fig. 22 illustrates a processing procedure for performing name learning by a model in the form of a flowchart. It is assumed that the model is trained on the server side.

First, the collected training data is classified for each sensitive attribute (step S2201), and it is determined whether the data is biased to a specific attribute value for each sensitive attribute, that is, whether there is data bias (step S2202).

Here, in a case where it is determined that there is data bias (Yes in step S2203), the data supplementation unit 122 automatically generates the data of the minor attribute of the sensitive attribute determined to have data bias by the GAN algorithm, mitigates the data bias (step S2204), and the model is trained (step S2205). Furthermore, in a case where it is determined that there is no data bias (No in step S2203), the model is trained without performing data bias mitigation (step S2205).

Furthermore, the model bias is corrected even after the trained model is mounted on a product or a service and released. Fig. 23 schematically illustrates a transaction performed between the edge device and the server for correcting model bias in an actual operation stage.

On the edge device side, the presence or absence of model bias is verified while the mounted trained model is being used. Then, when the model bias is confirmed, the server is notified (TR2301). In response to this, on the server side, a model parameter in which model bias has been mitigated by relearning, fine tuning, or the like is redistributed to the edge device (TR2302), and the trained model is updated. In this manner, in a case where the problem of the fairness of the trained model becomes apparent in the actual operation, the model bias can be corrected by cooperation between the server and the edge device.

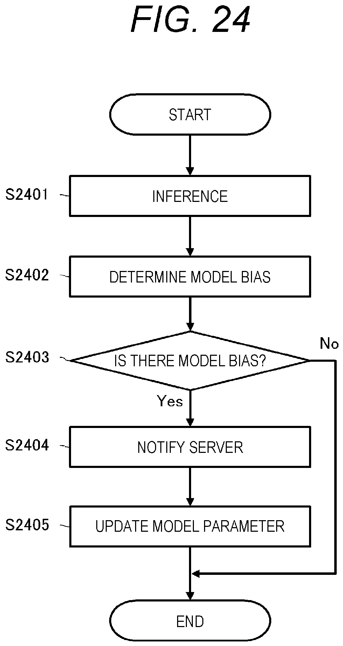

Fig. 24 illustrates a processing procedure executed at the time of actual operation by the edge device on which the trained model is mounted, in the form of a flowchart.

Each time data is input, the edge device makes an inference or a prediction (in this case, face detection in the content and display of the name of each face) is performed) using the mounted trained model (step S2401).

Then, the edge device checks whether or not the result of inference or prediction by the trained model is biased according to the difference in the sensitive attributes of the input data, that is, whether or not there is model bias (step S2402). For example, it is verified whether accuracy of face recognition and accuracy of name display differ depending on a difference in sensitive attributes such as race (or skin color) and gender.

For example, if accuracy is lower in black people than in white people and accuracy of name identification is lower in women than in men (for example, a black woman's name appearing in the content tends to be mistaken), this leads to problems of racism and gender discrimination. In a case where it is determined that there is model bias (Yes in step S2403), the edge device notifies the server of the model bias (step S2404).

On the server side, when notification of model bias is received, the model bias of the trained model is mitigated by relearning, fine tuning, or the like, and the updated model parameter is redistributed to the edge device. Therefore, the edge device sets the model parameter updated on the server side to the model (step S2405), and resumes the operation of the model in a state where the model bias is mitigated. In this manner, in a case where the problem of the fairness of the trained model becomes apparent on the edge device side in the actual operation, the model bias can be corrected by cooperation with the server.

INDUSTRIAL APPLICABILITY

The present disclosure has been described in detail with reference to the specific embodiment. However, it is obvious that those skilled in the art can make modifications and substitutions of the embodiment without departing from the scope of the present disclosure.

The present disclosure can be applied to training of a machine learning model that executes processing such as face detection, face identification, person/object detection, and posture estimation, as well as various types of detection, determination, estimation, and recognition by receiving an image or sound, and bias determination of the trained model. According to the present disclosure, it is possible to train a model by preparing training data from which data bias due to a sensitive attribute such as race or gender has been eliminated, and further to perform bias mitigation processing by performing model bias determination processing on the trained model.

In short, the present disclosure has been described in an illustrative manner, and the contents disclosed in the present specification should not be interpreted in a limited manner. To determine the subject matter of the present disclosure, the claims should be taken into consideration.

Note that the present disclosure may also have the following configurations.

(1) An information processing device including:

a determination unit which classifies training data for training a model for each attribute and determines presence or absence of bias of the training data due to a difference in attributes; and

a generation unit which automatically generates training data of a minor attribute and mitigates bias when the determination unit determines that there is the bias.

(2) The information processing device according to (1), in which the determination unit determines at least one of race, gender, or another sensitive attribute.

(3) The information processing device according to any one of (1) and (2), in which the determination unit determines an attribute on the basis of a skin color of a face image as training data.

(4) The information processing device according to any one of (1) to (3), in which the determination unit determines that there is bias when a difference in number of pieces of training data between attributes is equal to or greater than a predetermined threshold.

(5) The information processing device according to (4) further including a setting unit which sets the threshold.

(6) The information processing device according to any one of (1) to (5), in which the generation unit automatically generates training data of a minor attribute by using a GAN.

(7) The information processing device according to any one of (1) to (6) further including a training unit which trains the model by using training data to which training data of a minor attribute automatically generated by the generation unit is added.

(8) The information processing device according to any one of (1) to (7) further including a model bias determination unit which determines presence or absence of bias of the model that has been trained due to a difference in attributes of input data.

(9) The information processing device according to (8), in which the model bias determination unit determines presence or absence of bias of the model that has been trained on the basis of ratios of a prediction label in respective attributes of input data.

(10) The information processing device according to (9), in which

the model bias determination unit determines that there is bias when a difference in prediction labels between attributes of input data is equal to or greater than a predetermined threshold.

(11) The information processing device according to (10) further including

a setting unit which sets the threshold.

(12) An information processing method including:

a determination step of classifying training data for training a model for each attribute and determining presence or absence of bias of the training data due to a difference in attributes; and
a generation step of automatically generating training data of a minor attribute and mitigating the bias when it is determined in the determination step that there is the bias.

(13) A computer program described in a computer-readable format so as to cause a computer to function as:

a determination unit which classifies training data for training a model for each attribute and determines presence or absence of bias of the training data due to a difference in attributes; and
a generation unit which automatically generates training data of a minor attribute and mitigating the bias when the determination unit determines that there is the bias.

(14) An information processing device including:

a prediction unit which makes a prediction about input data by using a trained model; and
a determination unit which determines presence or absence of bias of a prediction result due to a difference in attributes of input data.

(15) The information processing device according to (14) further including
a notification unit which gives notification of a determination result obtained by the determination unit to an external device.

(16) The information processing device according to (15), in which
a model parameter in which bias has been mitigated according to the notification is received, and set in the trained model.

(17) An information processing method including:

a prediction step of making a prediction about input data by using a trained model; and
a determination step of determining presence or absence of bias of a prediction result due to a difference in attributes of input data.

(18) A computer program described in a computer-readable format so as to cause a computer to function as:

a prediction unit which makes a prediction about input data by using a trained model; and
a determination unit which determines presence or absence of bias of a prediction result due to a difference in attributes of input data.

REFERENCE SIGNS LIST

| | |
|---|---|
| 100 | Training system |
| 101 | Training data holding unit |
| 102 | Model training unit |
| 103 | Model parameter holding unit |
| 111 | Inference unit |
| 112 | Data input unit |
| 113 | Input data processing unit |
| 121 | Data bias determination unit |
| 122 | Data supplying unit |
| 123 | Model bias determination unit |
| 124 | Model bias mitigation unit |
| 300 | Convolutional neural network |

| 310 | Feature amount extractor |
|---|---|
| 320 | Discriminator |
| 1500 | Imaging device |
| 1501 | Optical unit |
| 1502 | Sensor unit |
| 1503 | Sensor control unit |
| 1504 | Inference unit |
| 1505 | Memory |
| 1506 | Visual recognition processing unit |
| 1507 | Output control unit |
| 1508 | Display unit |
| 2000 | In-vehicle camera |
| 2001 | Lens |
| 2002 | Image sensor |
| 2003 | Signal processing unit |
| 2004 | Inference unit |
| 2005 | Control unit |
| 2010 | Vehicle control system |

**Claims**

1. An information processing device comprising:

   a determination unit which classifies training data for training a model for each attribute and determines presence or absence of bias of the training data due to a difference in attributes; and
   a generation unit which automatically generates training data of a minor attribute and mitigates the bias when the determination unit determines that there is the bias.

2. The information processing device according to claim 1, wherein
   the determination unit determines at least one of race, gender, or another sensitive attribute.

3. The information processing device according to any one of claim 1 or 2, wherein
   the determination unit determines an attribute on a basis of a skin color of a face image as training data.

4. The information processing device according to claim 1, wherein
   the determination unit determines that there is bias when a difference in number of pieces of training data between attributes is equal to or greater than a predetermined threshold.

5. The information processing device according to claim 4 further comprising
   a setting unit which sets the threshold.

6. The information processing device according to claim 1, wherein
   the generation unit automatically generates training data of a minor attribute by using a generative adversarial network (GAN).

7. The information processing device according to claim 1 further comprising
   a training unit which trains the model by using training data to which training data of a minor attribute automatically generated by the generation unit is added.

8. The information processing device according to claim 1 further comprising
   a model bias determination unit which determines presence or absence of bias of the model that has been trained due to a difference in attributes of input data.

9. The information processing device according to claim 8, wherein
   the model bias determination unit determines presence or absence of bias of the model that has been trained on a basis of ratios of a prediction label in respective attributes of input data.

10. The information processing device according to claim 9, wherein

the model bias determination unit determines that there is bias when a difference in prediction labels between attributes of input data is equal to or greater than a predetermined threshold.

11. The information processing device according to claim 10 further comprising
   a setting unit which sets the threshold.

12. An information processing method comprising:

   a determination step of classifying training data for training a model for each attribute and determining presence or absence of bias of the training data due to a difference in attributes; and
   a generation step of automatically generating training data of a minor attribute and mitigating the bias when it is determined in the determination step that there is the bias.

13. A computer program described in a computer-readable format so as to cause a computer to function as:

   a determination unit which classifies training data for training a model for each attribute and determines presence or absence of bias of the training data due to a difference in attributes; and
   a generation unit which automatically generates training data of a minor attribute and mitigating the bias when the determination unit determines that there is the bias.

14. An information processing device comprising:

   a prediction unit which makes a prediction about input data by using a trained model; and
   a determination unit which determines presence or absence of bias of a prediction result due to a difference in attributes of input data.

15. The information processing device according to claim 14 further comprising
   a notification unit which gives notification of a determination result obtained by the determination unit to an external device.

16. The information processing device according to claim 15, wherein
   a model parameter in which bias has been mitigated according to the notification is received, and set in the trained model.

17. An information processing method comprising:

   a prediction step of making a prediction about input data by using a trained model; and
   a determination step of determining presence or absence of bias of a prediction result due to a difference in attributes of input data.

18. A computer program described in a computer-readable format so as to cause a computer to function as:

   a prediction unit which makes a prediction about input data by using a trained model; and
   a determination unit which determines presence or absence of bias of a prediction result due to a difference in attributes of input data.

## FIG. 1

TRAINING SYSTEM 100

EP 4 502 878 A1

## FIG. 2

```
                    ┌─────────────┐
                    │    START    │
                    └─────────────┘
                           │
                           ▼
   S201 ─┤         ┌─────────────────┐
                   │   COLLECT DATA  │
                   └─────────────────┘
                           │
                           ▼
   S202 ─┤         ┌─────────────────┐
                   │ CLASSIFY DATA   │
                   │ FOR EACH        │
                   │ ATTRIBUTE       │
                   └─────────────────┘
                           │
                           ▼
   S203 ─┤          ◇ IS THERE DATA BIAS? ◇──── Yes
                           │                      │
                          No                      ▼
                           │         ┌─────────────────────┐─ S204
                           │         │   SUPPLEMENT DATA    │
                           │         └─────────────────────┘
                           ▼
   S205 ─┤         ┌─────────────────┐
                   │   TRAIN MODEL   │
                   └─────────────────┘
                           │
                           ▼
   S211 ─┤         ┌─────────────────┐
                   │    INFERENCE    │
                   └─────────────────┘
                           │
                           ▼
   S212 ─┤         ┌─────────────────────┐
                   │ DETERMINE MODEL BIAS│
                   └─────────────────────┘
                           │
                           │         ┌──────────────────────┐─ S214
                           │         │  MITIGATE MODEL BIAS │
                           │         └──────────────────────┘
                           ▼
   S213 ─┤          ◇ IS THERE MODEL BIAS? ◇──── Yes
                           │
                          No
                           ▼
                    ┌─────────────┐
                    │     END     │
                    └─────────────┘
```

TRAINING PHASE
(DATA BIAS MITIGATION)

INFERENCE PHASE
(MODEL BIAS MITIGATION)

## FIG. 3

FEATURE AMOUNT EXTRACTOR 310     DISCRIMINATOR 320

$m_1 \times n_1$

PIC

$m_2 \times n_2$   C1

$m_3 \times n_3$   C2

$m_4 \times n_4$   C3

$m_5 \times n_5$   C4

$k_1$   $k_2$   $k_3$   $k_4$

FC1   FC2   FC3

OUTPUT LABEL

300

EP 4 502 878 A1

# FIG. 4

INPUT LAYER

HIDDEN LAYERS

OUTPUT LAYER

EP 4 502 878 A1

## FIG. 5

## FIG. 6

## FIG. 7

FIRST
PREDICTION LABEL

SECOND
PREDICTION LABEL

$s = 0$               $s = 1$

## FIG. 8

$\hat{X}_1(\hat{x}_1, \hat{y}_1)$

$X_1(x_1, y_1)$

$X_2(x_2, y_2)$

$\hat{X}_2(\hat{x}_2, \hat{y}_2)$

# FIG. 9

| SENSITIVE ATTRIBUTE | PREDICTION (POSSIBILITY OF EMPLOYMENT) |

MALE

EMPLOYMENT

REJECTION

FEMALE

EMPLOYMENT

REJECTION

# FIG. 10

| SENSITIVE ATTRIBUTE | PREDICTION (PREDICTION OF RE-OFFENDING) |

WHITE

|  | FALSE DETECTION | | OVERLOOK | |
|---|---|---|---|---|
| PREDICTION | NOT RE-COMMIT CRIME | RE-COMMIT CRIME | NOT RE-COMMIT CRIME | RE-COMMIT CRIME |
| | FALSE POSITIVE RATE (FPR) | | TRUE POSITIVE RATE (TPR) | |
| | NOT RE-COMMIT CRIME | | RE-COMMIT CRIME | |

BLACK

|  | FALSE DETECTION | | OVERLOOK | |
|---|---|---|---|---|
| PREDICTION | NOT RE-COMMIT CRIME | RE-COMMIT CRIME | NOT RE-COMMIT CRIME | RE-COMMIT CRIME |
| | FALSE POSITIVE RATE (FPR) | | TRUE POSITIVE RATE (TPR) | |
| | NOT RE-COMMIT CRIME | | RE-COMMIT CRIME | |

# FIG. 11

| SENSITIVE ATTRIBUTE | PREDICTION (PASS/FAIL IN LOAN SCREENING) |
|---|---|

**MALE**

PREDICTION

| | DEBT WILL NOT BE DISCHARGED | DEBT WILL BE DISCHARGED |
|---|---|---|
| FAIRNESS IS NOT CONSIDERED | | TRUE POSITIVE RATE (TPR) |
| DEBT WILL NOT BE DISCHARGED | | DEBT WILL BE DISCHARGED |

**FEMALE**

PREDICTION

| | DEBT WILL NOT BE DISCHARGED | DEBT WILL BE DISCHARGED |
|---|---|---|
| FAIRNESS IS NOT CONSIDERED | | TRUE POSITIVE RATE (TPR) |
| DEBT WILL NOT BE DISCHARGED | | DEBT WILL BE DISCHARGED |

# FIG. 12

| PREPROCESSING | TRAINING PROCESSING | POSTPROCESSING |
|---|---|---|
| MITIGATE BIAS OF TRAINING DATA | MITIGATE BIAS BY DISCRIMINATOR | MITIGATE BIAS BY PREDICTION |
| Reweighting | Adversarial Debiasing | Rejection Option Classification |
| WEIGHTING ON TRAINING DATA | USE Adversarial TO MITIGATE BIAS WHILE IMPROVING ACCURACY | CHANGE PREDICTION SO AS TO BE FAIR |

# FIG. 13

CLOUD

SERVER

TRAINING DATA
HOLDING UNIT
101

DATA BIAS
DETERMINATION
UNIT 121

DATA
SUPPLEMENTATION
UNIT 122

MODEL
TRAINING UNIT
102

MODEL BIAS
MITIGATION
UNIT 124

MODEL
PARAMETER
HOLDING UNIT
103

MODEL BIAS
DETERMINATION
UNIT 123

UPLOAD
PREDICTION LABEL

UPDATE
PARAMETER

UPLOAD
DETERMINATION
RESULT

MODEL BIAS
DETERMINATION
UNIT 123

INFERENCE
UNIT 111

UPDATE
PARAMETER

INFERENCE
UNIT 111

UPLOAD
DETERMINATION
RESULT

EDGE DEVICE
(PC)

EDGE DEVICE
(SMARTPHONE)

UPDATE
PARAMETER

MODEL BIAS
DETERMINATION
UNIT 123

INFERENCE
UNIT 111

EDGE DEVICE
(DIGITAL CAMERA)

# FIG. 14

EDGE DEVICE

SERVER

PROVIDE MODEL PARAMETER (TR1401)

PREDICTION
PROCESSING
(TR1402)

DETERMINE
BIAS
(TR1403)

MODEL BIAS NOTIFICATION (TR1404)

MITIGATE BIAS
(TR1405)

UPDATE MODEL PARAMETER (TR1406)

## FIG. 15

MEMORY
1505

INFERENCE UNIT
1504

OPTICAL UNIT
1501

SENSOR UNIT
1502

SENSOR
CONTROL UNIT
1503

OUTPUT
CONTROL UNIT
1507

DISPLAY UNIT
1508

IMAGE/INFERENCE RESULT

VISUAL RECOGNITION
PROCESSING UNIT
1506

IMAGING DEVICE 1500

# FIG. 16

SENSOR UNIT
1502

SENSOR
CONTROL UNIT
1503

VISUAL
RECOGNITION
PROCESSING UNIT
1506

INFERENCE UNIT
1504

(INFERENCE RESULT)

1600

## FIG. 17

SENSOR UNIT
1502

SENSOR
CONTROL UNIT
1503

VISUAL
RECOGNITION
PROCESSING UNIT
1506

INFERENCE UNIT
1504

(INFERENCE RESULT)

1700

EP 4 502 878 A1

# FIG. 18

*FIG. 19*

PIXEL UNIT
1911

MEMORY UNIT 1912

LOGIC UNIT 1913

1901

1902

1903

1900

1901

1902

1903

# FIG. 20

IN-VEHICLE CAMERA **2000**

CONTROL UNIT
2005

INFERENCE
UNIT **2004**

LENS
2001

IMAGE SENSOR
2002

SIGNAL
PROCESSING UNIT
2003

VEHICLE CONTROL SYSTEM
2010

EP 4 502 878 A1

# FIG. 21

# FIG. 22

```
            ┌─────────────┐
            │    START    │
            └─────────────┘
                   │
                   ▼
S2201  ┌──────────────────────────┐
       │ CLASSIFY DATA FOR EACH   │
       │       ATTRIBUTE          │
       └──────────────────────────┘
                   │
                   ▼
S2202  ┌──────────────────────────┐
       │   DETERMINE DATA BIAS     │
       └──────────────────────────┘
                   │
                   ▼
                                    Yes
S2203      ◇ IS THERE DATA BIAS? ◇────────┐
                   │                        ▼
                  No              ┌────────────────────────┐
                   │              │   MITIGATE DATA BIAS    │── S2204
                   │              └────────────────────────┘
                   │                        │
                   ▼◄───────────────────────┘
S2205  ┌──────────────────────────┐
       │        TRAIN MODEL         │
       └──────────────────────────┘
                   │
                   ▼
            ┌─────────────┐
            │     END     │
            └─────────────┘
```

# FIG. 23

```
┌──────────────┐    MODEL BIAS NOTIFICATION    ┌──────────────┐
│              │         (TR2301)              │              │
│              │ ────────────────────────────► │              │
│ EDGE DEVICE  │                               │   SERVER     │
│              │    MODEL UPDATE NOTIFICATION  │              │
│              │         (TR2302)              │              │
│              │ ◄──────────────────────────── │              │
└──────────────┘                               └──────────────┘
```

# FIG. 24

```
                    ┌──────────────┐
                    │    START     │
                    └──────┬───────┘
                           │
                           ▼
S2401 ─┐ ┌──────────────────────────────────┐
       │ │           INFERENCE               │
       └─└──────────────────────────────────┘
                           │
                           ▼
S2402 ─┐ ┌──────────────────────────────────┐
       │ │       DETERMINE MODEL BIAS        │
       └─└──────────────────────────────────┘
                           │
                           ▼                        No
S2403 ─┐     ◇ IS THERE MODEL BIAS? ◇ ──────────────┐
       └─                                           │
                        Yes                         │
                           │                        │
                           ▼                        │
S2404 ─┐ ┌──────────────────────────────────┐       │
       │ │          NOTIFY SERVER            │       │
       └─└──────────────────────────────────┘       │
                           │                        │
                           ▼                        │
S2405 ─┐ ┌──────────────────────────────────┐       │
       │ │      UPDATE MODEL PARAMETER       │       │
       └─└──────────────────────────────────┘       │
                           │◄───────────────────────┘
                           ▼
                    ┌──────────────┐
                    │     END      │
                    └──────────────┘
```

## INTERNATIONAL SEARCH REPORT

| International application No. |
| --- |
| **PCT/JP2023/003208** |

**A. CLASSIFICATION OF SUBJECT MATTER**

***G06N 20/00***(2019.01)i

FI: G06N20/00 130

According to International Patent Classification (IPC) or to both national classification and IPC

**B. FIELDS SEARCHED**

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2022-500747 A (GOOGLE LLC) 04 January 2022 (2022-01-04) paragraphs [0022]-[0041] | 1-2, 4-5, 8-14, 17-18 |
| Y | | 3, 6-7, 15-16 |
| Y | JP 2016-140374 A (SHARP CORP.) 08 August 2016 (2016-08-08) paragraph [0076] | 3 |
| Y | WO 2018/167900 A1 (NEC CORP.) 20 September 2018 (2018-09-20) paragraph [0017] | 6-7 |
| Y | JP 2021-93144 A (SAMSUNG ELECTRONICS CO., LTD.) 17 June 2021 (2021-06-17) paragraphs [0102]-[0105] | 15-16 |
| A | JP 2018-106216 A (NIPPON TELEGR. & TELEPH. CORP.) 05 July 2018 (2018-07-05) entire text, all drawings | 1-18 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **30 March 2023** | **11 April 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

International application No.

**PCT/JP2023/003208**

| Patent document cited in search report | | | Publication date (day/month/year) | Patent family member(s) | Publication date (day/month/year) |
|---|---|---|---|---|---|
| JP | 2022-500747 | A | 04 January 2022 | US 2020/0081865 A1 paragraphs [0030]-[0048] WO 2020/055580 A1 EP 3830766 A1 KR 10-2021-0028724 A CN 112639843 A | |
| JP | 2016-140374 | A | 08 August 2016 | (Family: none) | |
| WO | 2018/167900 | A1 | 20 September 2018 | US 2020/0193285 A1 paragraph [0019] | |
| JP | 2021-93144 | A | 17 June 2021 | US 2021/0174138 A1 paragraphs [0117]-[0120] EP 3832542 A1 KR 10-2021-0071410 A CN 112926574 A | |
| JP | 2018-106216 | A | 05 July 2018 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021012593 A

**Non-patent literature cited in the description**

- **Y. VIAZOVETSKYI** ; **V. IVASHKIN** ; **E. KASHIN**. *StyleGAN2 Distillation for Feed-forward Image Manipulation*, https://arxiv.org/abs/2003.03581